Europäisches Patentamt

European Patent Office

Office européen des brevets

(19)

(11)  **EP 1 019 337 B1**

(12)  **EUROPEAN PATENT SPECIFICATION**

(45) Date of publication and mention
of the grant of the patent:
**25.09.2002  Bulletin 2002/39**

(51) Int Cl.[7]: **C04B 35/573**, B23B 27/14,
C04B 37/00, C04B 41/87

(21) Application number: **98941338.0**

(22) Date of filing: **16.07.1998**

(86) International application number:
**PCT/EP98/04414**

(87) International publication number:
**WO 99/012866 (18.03.1999 Gazette 1999/11)**

(54) **METHOD OF MANUFACTURING A DIAMOND-SILICON CARBIDE-SILICON COMPOSITE AND A COMPOSITE PRODUCED BY THIS METHOD**

VERFAHREN ZUR HERSTELLUNG EINES DIAMANT-SILICIUMCARBID-SILICIUMKOMPOSITS UND EIN NACH DIESEM VERFAHREN HERGESTELLTES KOMPOSIT

PROCEDE DE FABRICATION D'UN COMPOSITE DE DIAMANT, CARBURE DE SILICIUM ET SILICIUM

(84) Designated Contracting States:
**AT BE CH DE ES FR GB IE IT LI NL SE**

(30) Priority:  **05.09.1997  RU 97115169
05.09.1997  RU 97115186
05.09.1997  RU 97115172
05.09.1997  RU 97115171**

(43) Date of publication of application:
**19.07.2000  Bulletin 2000/29**

(60) Divisional application:
**02012420.2
02012785.8**

(73) Proprietor: **Frenton Limited
Douglas IM1 1SQ, Isle of Man (GB)**

(72) Inventors:
• **GORDEEV, Sergey Konstantinovitch
St.Petersburg, 193076 (RU)**

• **ZHUKOV, Sergey Germanovitch
St.Petersburg, 196030 (RU)**
• **DANCHUKOVA, Lija Vladimirovna
St.Petersburg, 193231 (RU)**
• **EKSTRÖM, Tommy
S-113 35 Stockholm (SE)**

(74) Representative: **Hyltner, Jan-Olof
Albihns Stockholm AB,
Box 5581
114 85 Stockholm (SE)**

(56) References cited:
**EP-A- 0 010 257          EP-A- 0 012 966
US-A- 4 151 686**

• **PATENT ABSTRACTS OF JAPAN vol. 018, no. 558 (C-1264), 25 October 1994 & JP 06 199571 A (NIPPON SERATETSUKU K.K.), 19 July 1994 cited in the application**

**Description**

TECHNICAL FIELD

The present invention relates to a method of manufacturing a diamond-silicon carbide-silicon composite according to claim 1.

BACKGROUND OF THE INVENTION

There is a general need of extremely hard (superhard, >40 GPa) materials for many fields of application. These applications may be as tools for cutting, turning, milling, drilling, sawing or grinding operations etc. The hard materials may also be used for their wear, abrasion and erosion resistance when working as bearings, seals, nozzles or in similar cases. The materials may be working on or being in contact with cast iron, steel, non-iron metals, wood, paper, polymers, concrete, stone, marble, soil, cemented carbide and grinding wheels of aluminium oxide, silicon carbide, diamond or cubic boron nitride etc. As being the hardest material known, mono- or polycrystalline diamond is suitable for these purposes. Other common materials used for their hardness are for instance cubic boron nitride (CBN), boron carbide and other ceramics and cemented carbides, but only diamond or CBN containing materials can reach the superhard group of engineering materials.

Polycrystalline bodies with diamond particles bonded by a matrix comprising metal and/or ceramic phases produced by sintering diamond particles in the presence of such materials are known. Because of the diamond instability and tendency to graphitize, the heat treatment is done in conditions of diamond stability at 1300-1600°C, in high-pressure chambers with pressures of 30.000-60.000 atm (HP/HT).

The drawback of this process is that bodies of only relatively small size are produced. In addition the manufacturing technology is rather complex and requires special equipment.

Several patents reveal techniques to produce materials containing diamond, silicon carbide and silicon without using high pressure/high temperature. There are a number of variations of the process, mainly concerning the use of different carbonaceous materials (hereafter referring to all kinds of non-diamond carbon materials like carbon black, carbon fibres, coke, graphite, pyrolytic carbon etc). In principal the following steps are followed.

A. Carbon-coated diamond particles or non-coated diamond particles and carbonaceous materials are used as precursor materials.
Normally carbon coated diamonds are used. In the examples US patent 4,220,455 starts with adding a thin layer (500-1000 Angstrom) of carbon on the diamonds by a pyrolytic reaction. The pyrolysis is done in vacuum for a few minutes by feeding natural gas or methane, into a furnace with diamond particles at 1200°C. Sometimes diamonds without a pyrolytic carbon layer are used, as in US patent 4,381,271, EPO 0 043 541, EPO 0 056 596 and JP 6-199571A. Both carbon-coated and non-coated diamonds are mixed with carbonaceous materials as a main source of carbon e.g. carbon black, short carbon fibres or cloth and a binder e.t.c before the forming of green bodies.
B. Forming of green bodies of the diamond particle/carbon material mixture is done in a mould, sometimes by using moderate pressure. The formed green bodies contains additionally solvents and temporary or permanent binders of organic materials to facilitate the forming and to increase the strength of the green body.
C. Work-pieces are made by heat treating the green bodies. Some binders are vaporised without leaving any residues e.g. paraffin. Some binders are hardened leaving a carbonaceous residue in the work-piece, e.g. different resins like phenol-formaldehyde and epoxy resins.
D. Infiltration of the porous work-piece with molten silicon is done to form silicon carbide in a reaction between the carbon and the silicon. The produced silicon carbide fills the porosity together with a certain amount of residual silicon. The heat treatment is done in such a manner as to minimise the graphitization of diamond, which is considered harmful. Examples in US patent 4,220,455 makes the silicon infiltration in vacuum when the body is in a mould, at a temperature between 1400°-1550°C for 15 minutes, during which time the reaction between silicon and carbon is completed. US patent 4,242,106 uses a vacuum of 0,01-2,0 torr during the silicon infiltration. The required time, depending largely on the size of the body, is determined empirically and takes about 15-20 minutes at a temperature above 1400°C, or 10 minutes at 1500°C. US patent 4,381,271 uses carbon fibres that promote the infiltration of fluid silicon by a capillary action. In most of the patents infiltration is made in a mould. In some earlier patents the infiltration is made outside the mould, like in EPO patent 0 043 541.

The processes where carbon-coated or non-coated diamonds are mixed with carbonaceous materials might have disadvantages, e.g. difficulties in preparing homogeneous mixtures of these materials, difficulties of silicon infiltration due to very small pore sizes and necessity of special equipment for preparing homogenous mixtures.

In the patent RU 2064399 the addition of carbon by pyrolysis is done only after the forming and production of the work-piece. A preformed work-piece of diamond particles or a mixture of diamond particles and carbide grains as filler, for instance silicon and titanium carbides, is produced with water or ethyl alcohol as a temporary binder. The binder is evaporated and the work-piece is placed in a reactor, where pyrolytic carbon is deposited on all grains of the body by a pyrolytic reaction from a gas phase, e.g. methane at 950°C for 10 h. After this follows silicon infiltration.

The drawbacks of this process are the use of a great amount of hydrocarbon gas and that the processing time is rather long. If carbide grains are used as fillers, the same problems of homogenisation as mentioned above appear.

When heat-treated in air, diamonds start to graphitize and oxidise at temperatures of about 700°C. The pressure, temperature, holding time, diamond particle type, size and quality, impurities in diamond and the atmosphere influence the speed of the process of diamond deterioration. For instance if cobalt is present, this may catalyse a reaction already at about 500°C. To prevent this deterioration, the heating may be done in vacuum or in an inert gas. In high vacuum and hydrogen gas high quality diamond is stable for long times to about 1700°C and 2000°C respectively. None of the methods described above use graphitization intentionally. Instead the graphitization is considered as harmful and unwanted.

In RU patent 2036779 a preform is moulded of diamond powder eventually together with water or ethyl alcohol. The preform is placed in a furnace and impregnated with liquid silicon at 1420-1700° in argon or vacuum. In the process the surface of the diamond grains is minimally graphitized, so the greater part of the diamond is still unchanged. This minor amount of graphite, reacts in contact with infiltrated silicon creating a thin surface layer of silicon carbide that keeps back any further formation of diamond to graphite during the used process. The drawback of this process is poor control and there is no method for governing the amount of produced SiC, residual silicon or porosity left in the composite.

Thus in these previous patents there is no teaching about a well-controlled step of adding carbonaceous materials and intentional graphitization step for production of materials with desired amount of diamond, silicon carbide and silicon, with low porosity and no graphite.

There are some methods for improving the diamond composite materials produced by the above described techniques. One of them is to arrange the diamond particles as graded structures of concentration and size in the material. Some properties and thereby also the field of application of the composite will be affected by this arrangement of diamonds.

- A method of making a material where the diamonds are size graded is disclosed in the patent EPO 0 196 777. This material is produced by sintering at high pressure and high temperature in the diamond stable region. The grain size and/or packing density are varied in layers between the front face and rear face to get different wear resistance in these parts. The hardness or wear resistance of the different parts of the material is determined by variation of the particle size of diamond or by variation of the addition of other less hard materials to the diamond particles. The diamond sizes are less than 10 µm in the front face and ranging between 75-500 µm in the rear face.

The drawback of this method is that since it uses high pressure-high-temperature, the production of the material is more expensive and requires special equipment and there are size limitations.

- There are also a number of patents using different amount of diamond in different parts of the composite body. The following patents US 4,242,106; US 4,247,304; US 4,453,951; EPO 0 043 541; EPO 0 056 596 and several others, describe the production of layered structures of a final material with a diamond composite layer in contact with a supporting silicon carbide or silicon carbide-silicon substrate, for instance. US patent 4,698,070 describes the production of a composite with a diamond containing portion and a core portion united by a matrix of silicon carbide and silicon. Additional particle layers with another concentration than the first may also be provided. These layers are placed in different configurations for instance in corners, on the top, in the core etc.

Generally the drawback of these layered materials with different diamond size or concentration is that there may be differences in physical/mechanical properties in the diamond containing and supporting layers. Differences in thermal expansion coefficient and E-modulus, for instance, might cause unwanted stress situations at the interface and thereby weaken the composite under stress. Diamonds have a relatively low tensile strength and low toughness, and a distinct difference in diamond content in different parts joined by an interlayer may also affect the fracture resistance of composites. None of the methods described earlier result in bodies with prior specified distribution of diamond particles of different size throughout the material volume, with uniformly changing properties.

In both RU 2036779 and RU 2064399 patents the produced material has diamond particles only of one size, which significantly lowers its abrasive properties.

The composites produced according to US patent 4,220,455 consist of a mixture of diamond particles of different size. This mixture is used in the whole composite, i.e. the composite does not have layered structures. The particular size or sizes used are chosen depending on the desired packing of particles and resulting body. For most abrasive applications particles no greater than about 60 μm are preferred. Preferably to maximise the packing of the particles they should be size-graded to contain a range of sizes, i.e. small, medium and large particles. Preferably the size graded particles range from about 1 μm to about 60 μm. There are also several patents; USP 4,231,195; USP 4,353,953 where diamonds of different size are mixed in order to control the packing density.

The object of the present invention is a process for making diamond-silicon carbide-silicon composites having excellent properties, and the superhard material produced thereby. The method should be easily performed, fast and cost effective and offer possibilities to control several properties and cost of the final materials.

## SUMMARY OF THE INVENTION

The object of the invention is obtained by a method for manufacturing a diamond-silicon carbide-silicon composite from diamond particles, comprising the steps of forming a work piece with a porosity of 25-60 vol-% heating the work piece and controlling the heating temperature and heating time so that a certain desired amount of graphite is created by graphitization of diamond particles, thereby creating an intermediate body, wherein the amount of graphite created by graphitization is 6-50 wt-% of the amount of diamond, and infiltrating silicon into the intermediate body.

In a preferred embodiment the amount of graphite created by graphitization is 6-30 wt-% of the amount of diamond and the heating temperature during graphitization is lower than 1700°C. The heating temperature and heating time needed for the graphitization is empirically determined for the heating equipment used.

In a variant a certain amount of carbon is deposited in the work piece by exposing it to a gaseous hydrocarbon or gaseous hydrocarbons at a temperature exceeding the decomposition temperature for hydrocarbon or hydrocarbons and at least some graphitization of the diamond crystals is done before exposing the work piece to a gaseous hydrocarbon or gaseous hydrocarbons at a temperature exceeding the decomposition temperature for hydrocarbon or hydrocarbons. The intermediate body can be machined into the desired shape and size of the final body before the step of infiltration of liquid silicon.

In a further variant the intermediate body is heated in the presence of vaporous silicon and then machined into the desired shape and size of the final body before the step of infiltration of liquid silicon.

The work piece is formed with a non-uniform distribution of diamond particles with various sizes and qualities. The diamond particles in the work piece can be distributed in successively decreasing sizes from the surface of the work piece towards the centre thereof. The work piece can in a variant be formed from a homogeneous mixture of diamond crystals of various sizes eventually with the addition of a binder.

In yet another variant two or more work pieces are made separately and thereafter being brought together before the heat treatment and the infiltration steps.

The forming of the work piece may be made in a mould, the heat treatment and the infiltration of silicon being made after the work piece has been taken out of the mould.

## BRIEF DESCRIPTION OF THE DRAWING

The invention will now be described with reference to the enclosed Figures, of which,

Fig. 1 shows the preferred steps of the method according to the invention in a flowchart,

Fig. 2 shows the degree of graphitization versus the graphitization time at one specific temperature,

Fig. 3 a shows the relationship between the amount of carbon ($\alpha$ and $\gamma$) inserted into the body at different initial porosity $\varepsilon_0$ that meet the conditions of $\varphi_{Si} \geq 0$, in the final body

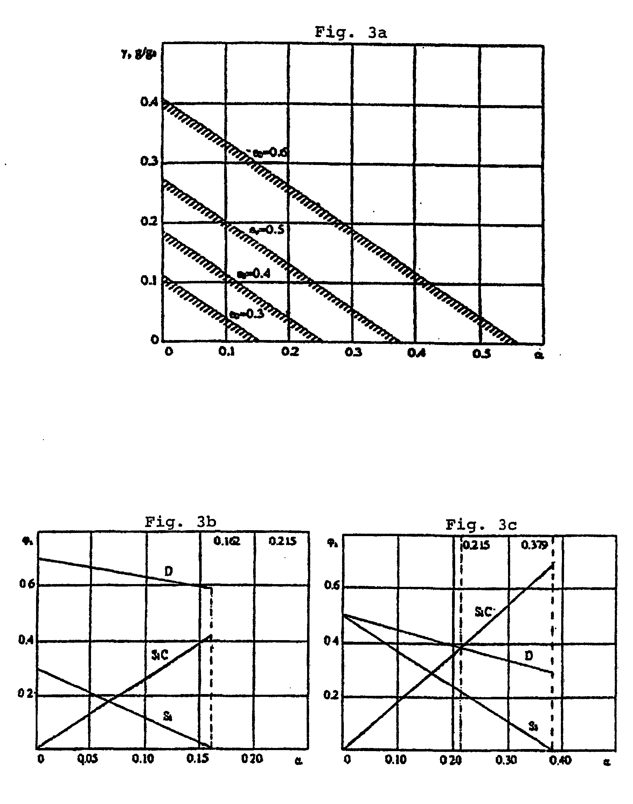

Fig. 3 b.c shows the relationship between the final body composition and diamond graphitization degree in the body, with initial work piece porosity $\varepsilon_0 = 0.3$ and $\varepsilon_0 = 0.5$, respectively,

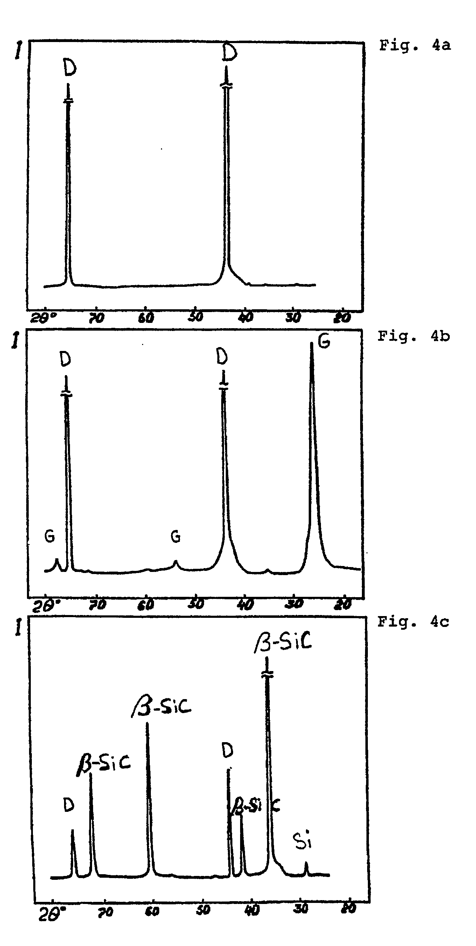

Fig. 4 a-c shows the results of X-ray diffraction analysis of a work piece, an intermediate body and the final body, respectively

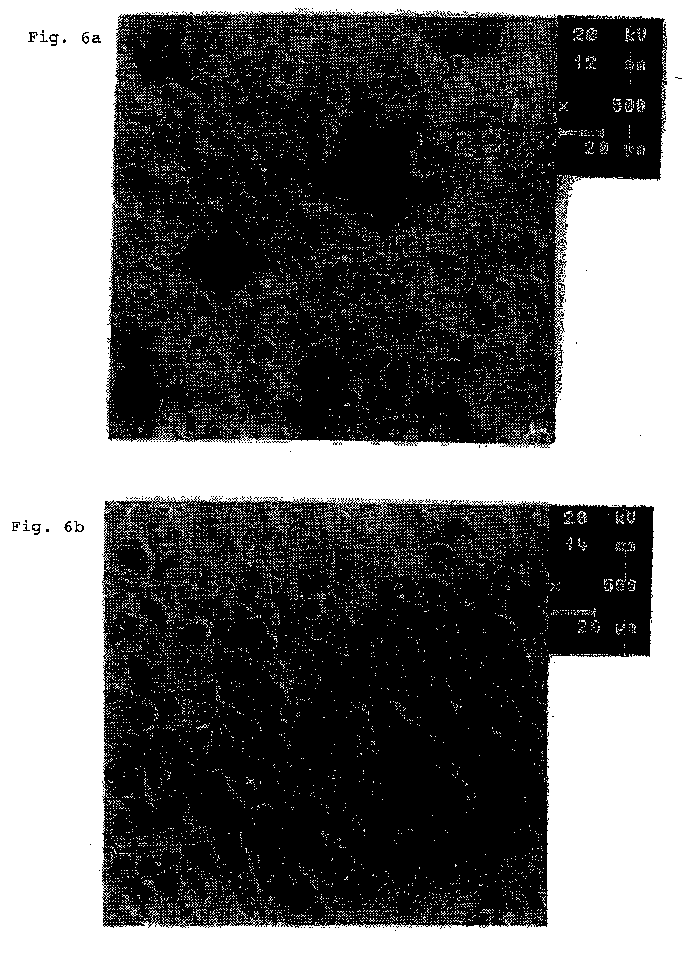

Fig. 5 shows the change of work piece porosity during graphitization at different initial work piece porosity, and

Fig. 6A1,6A2 show scanning electron micrograph pictures of abraded surfaces of two different samples.

DESCRIPTION OF THE INVENTION

The principle object of the present invention is to manufacture diamond - silicon carbide silicon composites having excellent properties with an uncomplicated method in a fast, cost effective and controllable way. The invention comprises several principles:

- The process uses diamond graphitization intentionally instead of avoiding it.
- Gradients or parameter variations of different kind are used to control both final properties of the product and manufacturing costs.
- Using preforming and near net-shaping technique combined with strengthening of the intermediate body to enable complicated final body shapes and to avoid expensive and difficult machining operations of the infiltrated body.
- Low cost production of large bodies and of large quantity of products.

In the process according to the present invention, diamonds of any size may be used. By submicron sized diamonds is meant diamond particles smaller than 1 μm and by small diamonds diamond particles smaller than 20 μm and more preferably smaller than 10 μm. Large sized diamonds, > 20 μm, are used in several applications. For high mechanical strength, especially in engineering components, the size of diamond particles used shall preferably be smaller than 20 μm. Very large diamonds with sizes larger than 60 μm are used for their abrasive ability, often in combination with small diamonds.

THE PROCESS; INTENTIONAL USE OF DIAMOND GRAPHITIZATION POSSIBLY IN COMBINATION WITH USE OF PYROLYTIC CARBON

The material according to the present invention is achieved by a process that uses graphitization of diamond, possibly combined with pyrolytic deposition of carbon, for production of diamond-silicon carbide-silicon composites. This signifies that the invention uses diamond graphitization, i.e. partial diamond transformation into graphite efficiently and in a planned and controlled manner.

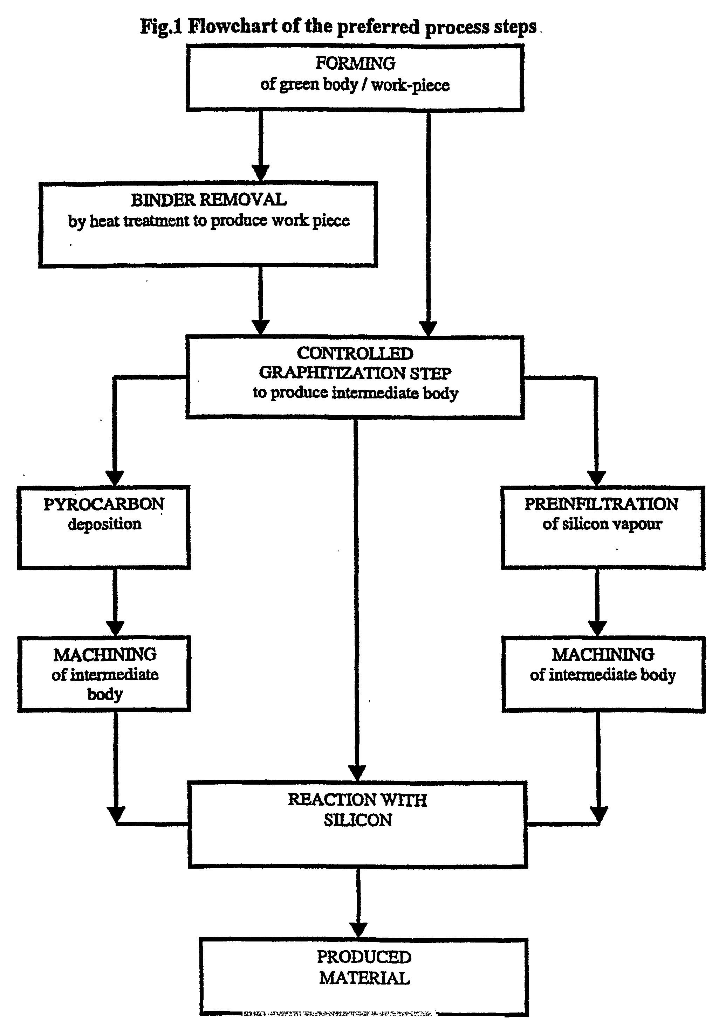

Figure 1 describes the preferred process steps in a flowchart. The different steps of the process according to the present invention are described by the following:

**Forming of a green body** is done from a mixture of diamond particles of various sizes together with a small amount of a temporary or permanent binder (up to 5 wt.-%), or without using a binder. The forming is done using established techniques, for instance by pressing, using slip and slurry casting, injection moulding etc. In the case when a mould is used for forming, the green body is removed from the mould.

**Production of a work-piece** is done by evaporating or hardening and decomposing the present solution agents and/or binders in the green body. If a green body is produced without any binders it is considered as a work-piece. For provision of a uniform and controllable graphitization throughout the whole work-piece volume, it is undesirable to have impurities from the binder present therein. These may catalyse or inhibit the graphitization process. It is obvious that a reason for having not less than 95 wt.-% diamonds in the work-piece is that precise control of the amount of carbon that will be present and where, is only possible in a body without fillers and other additional materials.

**Heat treatment of a work-piece for obtaining an intermediate body.** The work-piece with a diamond content of 95-100 weight % of the total mass is heat treated to obtain an intermediate body, by using controlled graphitization of diamond, or a combination of controlled graphitization of diamond and deposition of pyrolytic carbon, hereby referred to pyrocarbon. When combined, it is preferred to use graphitization prior to pyrocarbon deposition.

## Graphitization for obtaining an intermediate body

During graphitization the work-piece (or the intermediate body with deposited pyrocarbon) is heat treated in vacuum or in a controlled atmosphere, preferably an inert gas at 1000°-1900°C, preferably at 1200°-1700°C. Graphitization is negligible at temperatures lower than 1000°C. At temperatures higher than 1900°C the rate of graphitization is so high that it might be difficult to control with required precision, using low quality diamonds. The vacuum pressure is preferably lower than 1 mmHg. As inert gas nitrogen, argon, hydrogen or helium may be used, which provides for the absence of oxygen in the system. The inert gas pressure is not so important and is chosen according to applicability of the process, e.g. 760 mmHg.

## Pyrolytic deposition of carbon into the graphitized intermediate body

During pyrolytic deposition of carbon into the graphitized intermediate body (or into the work-piece), the body is exposed to a gas of hydrocarbon or hydrocarbons at a temperature that exceeds the decomposition temperature for the current gas or gases, for example natural gas at T=750°-950°C, or gas containing acetylene, methane, ethane, propane, pentane, hexane, benzene and their derivatives at T=510°-1200°C. The deposition of pyrocarbon strengthens the intermediate body and allows machining of the intermediate body.

**Pre-infiltration of the intermediate body** may be done in order to increase the strength and to allow machining of an intermediate body, as an alternative to the pyrocarbon deposition. Partial pre-infiltration is achieved for example by heating the intermediate body in the presence of vaporous silicon or by a chemical vapour deposition (CVD) method using organic silanes, such as the methylchlorosilane family. The strength of such a body can be controlled by the amount of silicon that is allowed to react with the graphite

**The infiltration of silicon into the intermediate or pre-infiltrated body** is carried out by well-known methods. The infiltration may preferably be done outside of a mould for instance by melting solid silicon or by liquid silicon feeding on an outer surface of an intermediate or pre-infiltrated body, by using differential vacuum infiltration techniques or by dipping the intermediate or pre-infiltrated body into liquid silicon. There is also a possibility to apply the silicon partly or fully by infiltration of vaporous silicon or by the chemical methods, for instance by using techniques similar to sol-gel, chemical vapour deposition etc, followed by a high temperature reaction.

During the infiltration the chemical reaction of non-diamond carbon and silicon takes place resulting in the formation of silicon carbide, which together with eventual free silicon forms the matrix of the produced body. A final body is the product of eventual additional treatment, mechanical or other, of the infiltrated body.

**Specifics about formation of carbon**

Non-diamond carbon in the body may thus be achieved by the following different ways

1. Graphitization by heat treatment of the diamond particles in the work-piece to transform the surface layer of diamond to graphite.
2. If a strengthened body for machining purposes is needed, deposition of pyrolytic carbon into the body is useful. The pyrocarbon part of the total carbon needed is determined by the required strength for the machining operation.
3. During the heat treatment for the silicon infiltration additional graphitization is made.
4. Eventual residual pyrolytic carbon from binders.

Thus, the determination of contributions to total amount of non-diamond carbon is made by

a) establishing the possible need for pyrocarbon.
b) establishing the degree of graphitization during the heat treatment for the silicon infiltration.
c) establishing the amount of any residual pyrolytic carbon from binders.
d) primary graphitization makes up the additional carbon amount needed.

Note that when no pyrocarbon is needed, process steps 1 and 3 are merged.

Thus one feature of this invention is the ability to govern and vary the degree of diamond graphitization by simultaneous control of process and material parameters such as shape of the time-temperature curve, i.e. temperatures, holding times and heating rates, size, type and quality of and impurities in the diamond particles, the atmosphere and the pressure. Control considerations include e.g.

1. The relative volume of silicon or alternatively residual pores, silicon carbide and diamond in the final body depend upon the degree of graphitization which consequently has to be executed with precise control.
2. For submicron and small diamond particles it is important that the graphitization does not go so far that the particles disappear. The graphitization should be less than than 50 wt-% and preferably lie between 6-30 wt-%.
3. When mixing small diamond particles with large particles, the size of the small particles must be carefully chosen so that the small particles will not disappear, unless so desired, and the large particles will be sufficiently graphitized. The graphitization should be less than than 50 wt-% and preferably lie between 6-30 wt-%.
4. The predominant method of governing the degree of graphitization is to choose the right shape of the temperature-time curve from about 1200° up to about 1700°C, in vacuum or in inert gas at atmospheric pressure, as a function of diamond particle size and quality.
5. For different desired degrees of graphitization, suitable for materials aimed at different technological applications, different shapes for these curves have to be chosen.
6. By choosing the correct heat treatment, it is possible to achieve a final body with very low porosity, no graphite and a well-balanced composition between diamond, silicon carbide and silicon. If the graphitization degree is low the final composite will contain a larger amount of silicon or porosity. The higher the degree of graphitization, the more silicon carbide the final body will contain.

An increase of the temperature and holding time increases in general the amount of graphite produced. The velocity of the graphitization front movement from the surface of a diamond particle into the diamond particle is determined also by the crystallographic direction and amount of material impurities and defects. When all other conditions are the same, the velocity of the graphitization front propagation will be the same for large and small diamond particles. However, the difference in particle size determines different relative graphitization degrees for large and small particles. The degree is significantly higher for small particles and is proportional to the specific area of the diamond. Thus it is important to choose optimal conditions of the heat-treatment in order to control the production of a material by the proposed method and it is of particular importance when using small diamond particles.

For small particles it is very important to accelerate the heating rate in the temperature area greater than 1200°, because the graphitization rate depends strongly on the temperature. Thereby the graphitization decreases (compared to slower heating to the same temperatures) and the degree of graphitization does not exceed the desired limit ($\leq$ 50 wt.-%). This makes subsequent liquid silicon infiltrating of the intermediate body possible. Silicon infiltration throughout the body will not occur unless pores of sufficient size exist throughout the body. The process of graphitization is delicate to control and realise. It must be adjusted to the equipment and material that is used. Some of these parameters have to be empirically related to match the equipment and materials that are used.

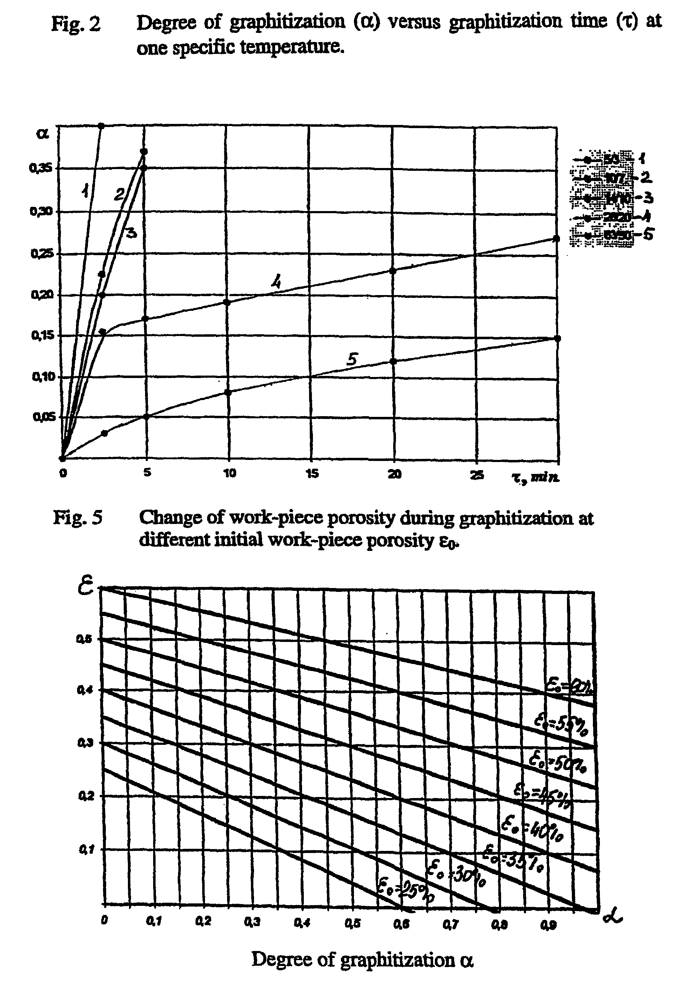

Figure 2 shows the degree of graphitization, $\alpha$, versus the graphitization time, $\tau$, at one specific temperature. As can be seen the degree of graphitization increases more rapidly for small diamond particles (5/3, 10/7 and 14/10 μm) compared to larger particles (28/20 and 63/50). The larger the size is, the slower the relative graphitization rate increases.

One of the advantages with the graphitization process is the improvement of the diamond surface. Generally the cost of diamonds is related to the quality and size. It is well known that the surface layer of most diamond particles has a great number of defects. Defects and impurities on the surface will reduce mechanical and chemical stability. It is desired not to have surface defects and impurities while still not using expensive, high quality diamonds. This is achieved by intentionally transforming the surface layer of the diamond to graphite by heat treatment. The graphitization starts on the surface, gradually propagating deeper into the particle. Furthermore not only the diamond surface may be improved by diamond graphitization but also the bulk properties. Diffusion processes start in the diamond when it is heated. By this diffusion process metallic and other impurities are moved to the surface of diamond and embedded in the silicon carbide or silicon. As the graphitization transforms the defective layer on the diamond surface it will result in improvement of the total particle properties and as a consequence, of the whole composite material. To achieve these improvements the graphite layer surrounding the diamond particle should be at least 50 nm, preferably thicker than 200 nm. The graphitization should be at least 6 wt-%.

Another very important achievement of the diamond graphitization is the extremely strong bond of the formed SiC, coating each individual diamond particle. The diamond will be bonded to the matrix and in a demanding application it will not be pulled out.

During the total manufacturing process leading to a dense or near dense body with no graphite, certain rules must be obeyed:

The porosity of the materials consists of pores of different size; larger pores and smaller pores. The preformed work-pieces have a certain volume percentage of porosity and certain pore sizes before the heat treatment and the silicon infiltration, determined by the diamond particle size and size distribution, by other materials that are present or added and eventual compacting of the green bodies.

The diamond content is decreasing corresponding to the amount of graphite that is formed during the graphitization of diamonds. The total amount of non-diamond carbon in the body, including added pyrocarbon or from possible residual of binder, must be controlled in order to achieve a final body with an optimum content of silicon carbide (produced in the reaction between the non-diamond carbon and the silicon) relative to elemental silicon, the elemental silicon filling up the porosity creating a dense or near dense body.

Investigations made by the inventors show the influence of the initial porosity and degree of graphitization upon the properties of the final body. At a work-piece porosity of greater than 60 vol.- %, the strength of the work-piece is insufficient for realisation of the subsequent steps of the process. When the porosity of a work-piece is less than 25 vol.-%, it is difficult to infiltrate silicon into the intermediate body, and the final body will have significant residual porosity. The same problems appear if the graphitization degree is more than 50 wt-% or if the amount of deposited pyrocarbon and residual carbon from binders is more than 25 wt-%, because the limiting small pores will not be sufficiently large (due to too thick carbon layers). In such cases during silicon infiltration, a dense layer of silicon carbide is formed in the surface zone of the intermediate body, which blocks the penetration of liquid silicon into internal parts of said intermediate body.

For a given initial porosity of the work-piece $\varepsilon_0$, the maximum amount of carbon, prepared by graphitization, deposition of pyrocarbon and any possible residual pyrolytic carbon from binders, that at a later processing step will allow reaction between all of the carbon with infiltrated silicon to form silicon carbide, is illustrated in figure 3a. The relative amounts of graphite ($\alpha$) and pyrocarbon plus residual carbon from binders ($\gamma$) for any acceptable combination hereof are also distinguishable from this figure. The process is limited by the total amount of carbon related to the porosity. At a certain initial porosity, the final composite will contain a large amount of silicon if the amount of carbon is too small. If the amount of carbon is too large, certain amounts of residual carbon will be left in the final composite, which is unwanted because the carbon acts like defects in the material. See also the two graphs, fig.3b and fig.3c that shows the relationship between the graphitization degree for a certain initial porosity and the composition of the final composite. As can be seen the variation of the components diamond, silicon carbide and silicon is linear. As the graphitization degree increases, the carbon content increases while the diamond and silicon contents decrease.

These figures have been produced by using these following equations under the conditions that the total body volume does not change and that there are no pores in the produced body:

The volume content of diamond in the final material is:

$$\varphi_D = (1-\varepsilon_0)(1-\alpha) \qquad \text{[eq. 1]}$$

where $\alpha$ is the graphitization degree, i.e. amount of graphite, $\varepsilon_0$ is the initial porosity of the work-piece.

The volume content of silicon carbide in the final material is determined by the amount of carbon that has reacted with silicon:

$$\varphi_{SiC} = (1-\varepsilon_0)(\gamma+\alpha)\, \rho_D M_{SiC} \,/\, (\rho_{SiC} M_C) \qquad \text{[eq. 2]}$$

where $\rho_D$ and $\rho_{SiC}$ are the densities of diamond and silicon carbide, $M_{SiC}$ and $M_C$ are the molecular masses of silicon carbide and carbon.

The volume content of silicon in the final material is:

$$\varphi_{Si} = 1-(\varphi_{SiC} + \varphi_D) \qquad \text{[eq. 3]}$$

To perform the production of non-porous material it is necessary to meet the condition of $\varphi_{Si} \geq 0$. This condition is fulfilled by the values of $\alpha$ and $\gamma$ falling into the areas shown in fig.3a. Therefore the amount of pyrocarbon and binder residues that may be inserted to meet the condition of $\varphi_{Si} \geq 0$ in the final material depends to a large extent on the graphitization degree.

The solutions of equations 1, 2 and 3 at $\gamma=0$ gives the realationship between the diamond composite composition and initial porosity of the work-piece according to fig.3b-c.

Figure 4 shows the results of phase X-ray diffraction analysis of samples made according to this process. It is obvious from Fig.4a that the initial work-piece formed of diamond powder contains a diamond phase (marked with «D»). Subsequent heat treatment of the work-piece to obtain an intermediate body results in formation of a graphite phase in it, as can be seen in Fig.4b (marked with «G»). In the subsequent silicon infiltration of the intermediate body, the silicon reacts with graphite and produces silicon carbide. Fig.4c shows that the graphite is absent in the final product and that diamond, silicon carbide (marked with «SiC») and silicon (marked with «Si») is present.

USE OF PARAMETER VARIATIONS OF DIFFERENT KIND

Parameter variations may be applied to the material during various processing steps to control both final properties of the product and the manufacturing cost. The variation may be a successive change of a parameter, i.e. a gradient. Different combinations of gradients and/or parameter variations may be applied to the entire body or parts of the body.

The applied parameters are:

- diamond particle size
- diamond quality
- diamond bonding
- porosity and pore sizes
- amount of silicon carbide and silicon

Several of these parameters are dependent on each other. In the following examples of controlling the final properties by the use of gradients and combinations thereof will be shown.

**Variation of the diamond particle size;**

**Combination of diamonds of different sizes**

The material obtained by the method of the present invention may include not only one but several sizes of diamond particles. The use of diamonds of several sizes in the material gives it special characteristics. Large diamond particles provide the material with good abrasive properties (hereby referred to abrasive, wearing, cutting and other mechanical material removing properties). However, lower relative wear resistance of the SiC/Si matrix may lead to debonding, loss of these large diamonds from the matrix, especially under severe operational conditions thereby decreasing the lifetime of a composite tool. By combining large diamond particles with small in a homogeneous mixture, the lifetime of the tools will increase due to an increased wear resistance of the formed new matrix. Small diamond particles reinforce the composite. Being distributed throughout the whole SiC-Si matrix, small diamond particles increase the Young's modulus, the thermal conductivity, the hardness, the wear resistance etc. For instance, when about 40 vol.-% of diamond particles with a size of about 10 μm are included in the SiC-Si matrix, the Young's modulus will increase from 400 to 650 GPa and the thermal conductivity will increase from 80 to 250 W/mK, if compared to a SiC-Si matrix without diamonds. So, the use of small diamonds together with large gives not only enhanced material properties but also is more economical than only to use large.

**Gradient of diamond sizes**

Generally the drawback of producing materials with different diamond size or concentration in different parts (that has been compacted together before silicon infiltration) is that there may be differences in physical/mechanical properties in the layers. These differences might cause unwanted stress situations at the interface and thereby weaken the composite.

By the method of the present invention it is possible to produce a material with prior specified distribution of diamond particles of successively changing size throughout the body volume, a size gradient material, with uniformly changing properties that will overcome or strongly decrease these above mentioned drawbacks.

A practical way of producing a composite with a gradient arrangement is, for instance, to form a body with three different parts in a mould. In the first part a mixture of particles with sizes A, B and C is used. The second part consists of particles with sizes A, C and D. The third part consist in turn of particles with sizes A, D and E. Diamond particles of size A are smallest. To have small diamonds (size A) throughout the body increases the strength of the matrix, i.e. material between the larger diamond particles. After being placed in the mould, these individual parts are vibrated, and then finally pressed together. The parts are then bonded by the graphitization, pyrocarbonization and during the silicon infiltration. The smooth transition in particle size between the parts through the body volume will form a size gradient material and the small diamonds of size A will strengthen the matrix.

Advantages with a gradient arrangement is the possibility to enhance certain properties depending on the diamond particle size in desired parts in the material, for instance to increase the wear resistance in areas being exposed to wear. One practical example is when used as sealings and bearings. In addition the use of small diamonds is more economical than only to use large.

**Variations of the diamond quality**

Diamonds of high quality are generally more expensive than diamonds of lower quality. The term quality is understood as something that varies with the following parameters; mechanical and optical properties, if it is well crystallised or not, defects like inclusions and cracks (mostly in the surface), shape, if they are synthetic or natural etc.

The material obtained by the method of this invention may be produced by using cheaper diamonds of lower quality in those parts of the composite, which at application need less performance. Good quality diamonds are used to enhance the properties and the performance in critical areas. By this way it is possible to lower the total cost of diamonds. Additionally graphitization will improve the surface of diamonds of lower surface quality.

**Variations of the bonding of large diamonds**

The material obtained by the method according the invention can be used for various fields of application, from tools for grinding, turning, milling, for instance, to applications where the material that is in contact with the composite is not aimed to be affected.

Our process allows adjustment of the material to different fields of application by optimising the performance of the composite for each field. Due to its superior hardness, diamond is the component in the composite that is used for the main part of the work effort, therefore this adjustment may be done by altering the diamond parameters; type, particle size and concentration.

There are several types of diamond particles; from well crystallized blocky single crystals with sharp cutting edges to types consisting of different diamond layers on top of each other, e.g. onion-shaped, where each layer has cutting edges. The latter type is sometimes referred to as friable. These two types have significantly different properties and between these extremes there are a large variety of diamond types.

In other materials, for instance when used for grinding wheels, it is known that the chosen diamond type has a great influence on the properties of the grinding wheel. To adjust the properties in a proper way it is however necessary to adjust the bonding force of the diamonds to the diamond type used.

In known grinding wheel materials it is difficult to achieve such detailed adjustment of the bond needed for optimal performance. Principally three different types of bonds are used for grinding wheels; resin bond, metal bond and vitreous bond.

By the method according to the invention there are good possibilities to make an adjustment of bond of larger diamonds (>20μm) and properties of the bonding matrix (here consisting of small diamonds, silicon carbide and silicon). A suitable hardness of the matrix can be chosen by varying the concentration of small diamonds of size < 20 μm, preferably < 10μm (0-50 vol.-%); silicon carbide (20-99 vol.-%) and silicon (1-30 vol.-%) and thereby also the wear resistance of the matrix and the subsequent bond of the larger diamond particles.

It is possible to choose the hardness of the matrix within a range of about 20-63 GPa by varying the composition of the matrix; hardness of diamond is about 100 GPa, of silicon carbide about 25 GPa and of silicon much less than 10 GPa. By this kind of adjustment the performance of our improved material is optimized for various applications.

A matrix hardness of 20-30 GPa is preferable for diamond types requiring a relatively weak bond; 50-63 GPa for diamond types that need a strong bond; and a hardness of 30-50 GPa for diamond types or mixtures requiring intermediate bonding strength.

## Variations of the porosity and pore sizes in the work-piece; Gradient of porosity and pore sizes

By the present method it is possible to produce an intermediate body with different amount of porosity and various pore sizes throughout the body. By this method it is possible to produce a work-piece with total porosity ranging from 25 % to 60% and with pore sizes ranging with the size of the diamond particles.

The pore structure determines the extent to which it is possible to infiltrate silicon so that all of the non-diamond carbon in the intermediate body is reacted with the silicon. Too small pore sizes and also too little porosity, unsuitable distribution of pore channels, improper infiltration, too high viscosity of the silicon etc may lead to blocking of infiltration because produced silicon carbide prevents molten silicon to penetrate the material further, throughout the whole body. Especially narrow pores are critical because they can easily be clogged, which will block and interrupt further infiltration.

This prevention of the infiltration has earlier been one of the limitations for producing thick and large infiltrated bodies useful for such purposes as engineering details, structural components, load carrying devices such as bearings etc.

By distributing diamond particles of successively decreasing sizes from the surface of the green body towards the centre, a body with a pore size gradient is made. Pores of increasing sizes from the centre of the body towards the surface will facilitate the infiltration by allowing silicon to penetrate the inner parts of the body by minimising the risk of blocking the infiltration near the surface zone. This build-up of the porosity makes possible to produce larger bodies than before. In addition in the present method a controlled amount of carbon is placed tightly to the diamond particles and is not placed between the diamonds, which is advantageous when creating a suitable pore structure.

In practise the pore size gradient is easily achieved with the diamond size gradient and also by variation of the packing density of the diamonds in the green body, the diamond loading.

## Variation of the amounts and gradient structure of silicon carbide and/or silicon

The silicon carbide and silicon matrix is tightly bonded to the diamond particles providing excellent properties of the material according to the present invention. Furthermore the silicon carbide content is important for the properties of the material, affecting for instance the hardness and the bonding of diamonds. The amount of silicon will also affect the properties - increased silicon content will lower the hardness and wear resistance. Other properties that are affected by the composition is for instance thermal conductivity increasing with the diamond content, electrical conductivity increasing with the silicon content etc.

Therefore a well-balanced composition between the diamond, silicon carbide and silicon is desired. This balance in composition depends on the intended specific application for the composite. By varying the composition it is possible to control the properties and thereby adjust them for the specific application. The way to vary the content of silicon and silicon carbide in the final body is to alter the amount of non-diamond carbon in relation to available porosity. This is done by altering the conditions of the heat treatment giving different amount of graphite formed and pyrocarbon added, by different amounts of non-diamond carbon left from binder residues, by diamond size/pore size variations etc. (A gradient of size will give a gradient of silicon carbide and silicon).

When used as engineering materials fully dense bodies are preferred. However in certain applications like grinding wheels a porous final body is preferred. The remaining porosity must be controlled, which is very difficult, if at all possible, by infiltrating the intermediate body by liquid silicon. One reason is that it is difficult to add an exact amount of silicon that is necessary for the process, especially for small objects. This leads to lack of control of the homogeneity of the infiltrated body. Too little silicon would result in excess carbon in the material. The other reason is the lack of control of where the possible excess silicon is deposited.

The remaining porosity in the final body is more easily controlled by the present method by using the pre-infiltration of silicon technique i.e. by exposing the intermediate body to silicon vapour or using Si-deposition by a CVD technique. In such process the amount of silicon added to the intermediate body can be controlled by a combination of the amount of vaporised silicon, the temperature and the pressure and time of the process.

Thus adding silicon vapours is another way to affect the silicon carbide and silicon content in the final material, independently from the other parameter variations.

## PREFORMING AND NEAR NET-SHAPE TECHNIQUE COMBINED WITH STRENGTHENING OF THE INTERMEDIATE BODY

By this method it is possible to produce bodies of various predetermined sizes and shapes. The bodies produced may be large and have complicated shapes, which will be illustrated in this section.

By using earlier known methods the forming of green bodies of carbon-coated or non-coated diamonds mixed with carbonaceous materials, is done in a temporary mould or same mould as the evaporation/decomposition of binders and silicon infiltration. A relatively large quantity of binders might be required for this forming, especially when using large diamond particles. The productive efficiency is decreased by requiring a mould for each green body when placed in a furnace. The consumption of moulds is high; the lifetime of the mould is decreased due to the high wear in the heat treatment processes. There might also be problems with the releasing of the composites from the moulds. Graphite moulds are commonly used and during the liquid silicon infiltration step some silicon may react with the graphite and thereby cause problems of releasing of the body from the mould.

The preforming technique of our method is not restricted to using moulds, to the ability of producing moulds of complicated shapes or to the ability to release and take out an infiltrated body from the mould as for some other earlier known methods. The forming of the green bodies according to the present invention is made by known techniques such as pressing in moulds, tape and slip casting, injection moulding etc. It is possible but not necessary to use a mould during the forming step, heat treatment step or infiltration step. Preferably the heat-treatment and infiltration steps are done without using a mould.

During graphitization the diamond is transformed to graphite of lower density therefore requiring more volume. However, the process according to the present invention is characterised by constant shape and size throughout all the process steps from the forming of the green body/work-piece through the subsequent steps into a final product (except intentional machining of the intermediate body). The conclusion should be that the graphitization of the diamond particles affects the pores, i.e. the porosity changes in the intermediate body. Thus the method ensures size and shape congruity through the whole process. This near net-shaping technique provides for a waste-free production and makes possible to produce a final body of predetermined size and shape, thus the final body requires no machining except eventual finishing operations.

Fig.5 illustrates a linear change of the intermediate body porosity, $\varepsilon$, during graphitization versus the degree of graphitization, $\alpha$, at different initial work-piece porosity.

Unless it is desirable to machine or execute additional shaping of the intermediate body i.e. if there are no special requirements on the shape, it is preferred to let the carbon be derived from the graphitization process.

The near net-shaping technique of our method is applicable to a great extent. Should however, machinability of the intermediate body be desirable in addition to the near net-shape technology, for instance if the final body requires very complicated forms, pyrocarbon depositing or pre-infiltration of silicon into the body is advantageous. The deposition leaves a firm body and gives the intermediate body excellent strength even without using any binders, which is not the case with an intermediate body comprising of diamond particles with only graphitized surfaces.

This makes possible to machine the intermediate body with relatively advanced methods, e.g. milling, turning and drilling, without breaking it. This enables much more complex shapes compared with those that are obtained just by forming of the green body/work-piece. Besides, this represents considerable cost savings also because machining of the final product is extremely difficult due to the high hardness.

In order to choose the best relation between the amount of carbon derived from the graphitization and pyrocarbon process an analysis of the required additional machining and of desired properties must be done. It requires about 5-6 hours of heat treatment at about $850°C$ to deposit pyrocarbon into a green body with diamonds of 20/28 $\mu$m

in an amount of 5 wt.-% of the total mass, while it only requires 3 minutes at 1550°C to transform about 15 wt-% of the diamond to graphite. Still using pyrocarbon is more economical than to machine the final produced body because such machining is time consuming and difficult due to the very high hardness and extreme wear resistance of the produced material.

By this method of using diamond graphitization or combining diamond graphitization with pyrocarbon deposition or pre-infiltration of silicon, it is possible to produce bodies of large sizes and of very complicated forms. Hollow bodies and bodies with holes and cavities may be produced by joining work-piece elements, before heat treatment and silicon infiltration. For instance, a hollow sphere may be produced by joining two hollow hemispheres, a hollow hexagon by joining six plates etc. This technique is very advantageous because it saves expensive diamond material and weight in the final body, and it gives possibilities to produce hollow components suitable for different engineering purposes, when being in the same time spared from additional expensive and tedious machining of the final material. It is also possible to produce bodies with a cavity that fits to the shape and size of a shaft of a non-circular cross section. This shaft is then fitted into the final composite body, eventually together with an adhesive to adhere the shaft to the composite. Thick and large bodies may also be produced by using pore size gradients facilitating the infiltration of the silicon, as described above.

Furthermore when producing a composite body, pyrocarbon deposition may be used in preparation machining to such shapes that would have not been allowed or possible with mould pressing, without breaking the mould or e.g. using a mould that can be divided.

It is obvious that there is a possibility to produce large bodies by stacking several intermediate bodies upon each other with a silicon layer in between. This might lead to inhomogeneous mixtures, inhomogeneous infiltration, shrinkage of the body and problems with the shape stability. Therefore our method is the preferred.

It is also possible to combine intentional graphitization and addition of carbonaceous materials from the beginning, for instance by adding a larger amount of binder from the beginning, but the method according to the present invention is the preferred. Tests with mixing diamonds together with carbonaceous materials like carbon black and carbon fibres, and binders like paraffin and epoxy resins, was made. The results from these tests showed that the work-pieces and the samples after infiltration had cracks and breaches and also showed changes in shape.

ADVANTAGES WITH THE PROCESS AND MATERIAL ACCORDING TO THE PRESENT INVENTION

One of the great advantages of the present invention is that the process parameters can be varied to accomplish the desired diamond graphitization in the work-piece to provide optimal conditions for the production of a polycrystalline body of predetermined desired shapes and sizes, having desired strength, physical and mechanical properties. In comparison with methods where carbon-coated or non-coated diamonds are mixed with carbonaceous materials for production of diamond-silicon carbide-silicon composites, the proposed method using graphitization and when required, pyrocarbon deposition or pre-infiltration of silicon, has several advantages:

1) During diamond graphitization the graphite is formed directly on the surface of all diamond particles and during possible deposition of pyrocarbon directly on graphitisized diamonds. Therefore carbon is tightly in contact with the surface. Thus, the critical small pores between particles remain free for subsequent silicon infiltration of the intermediate body. Smaller particles of carbon black or carbon fibres etc. are placed between the diamonds when using known techniques of mixing carbonaceous materials with diamond particles. These smaller particles may agglomerate in the narrowed pores, thus making the pore sizes even smaller, which may affect the silicon-infiltration negatively.

2) The distribution of carbon is important for the properties of the final material. The carbon layer is in tight contact with the diamond surface by the diamond transformation into graphite and by possible deposition of pyrocarbon onto the body. This tight contact guarantees the formation of silicon carbide directly on the surface of the diamond particles thus forming a diamond-matrix interface of high adhesion i.e. the diamonds are tightly bonded to the silicon carbide-silicon matrix. The properties are improved due to the high adhesion of both small and large diamonds. The diamonds will not chip out from the matrix so easily while used in different applications. The material is extremely wear resistant. When using in operations requiring very strong bonding, the large diamond particles will be used totally in the process, while in traditional abrasive materials (with metallic or organic bonds) the diamonds are only used to about 50 vol.-% before falling out from the matrix.

3) Heat treatment of the eventual binder and graphitization can be accomplished using the same equipment as for silicon infiltration (when pyrocarbon deposition is not used). Thus these process steps can be realised step by step in the same furnace resulting in decreased overall time for producing the final material.

4) The graphitization of diamond starts on the surface of the diamond particles, gradually propagating deeper into the particle. The graphitization transforms the defective layer on the diamond surface, resulting in improvement of the particle properties and as a consequence, of the whole composite material for instance regarding the thermal stability. This allows the use of relatively low cost diamonds.

5) In the present invention, graphitization of diamond with or without deposited pyrocarbon avoids the various problems associated with physically mixing in carbonaceous materials as the source of carbon. These problems include non-uniform distribution of carbon, incomplete reaction with silicon, blocking of pores and inhomogeneities due to different size, shape and density of the mixed materials.

6) The graphitization will provide for fast and proper carbon formation in the whole body volume, starting from the surface of the diamond, expanding linearly. Only a relatively small amount of diamond is transformed. Thus when producing very thick and large bodies, the graphitization is advantageous due to the ability to form carbon even in deeper parts of the body without risk of blocking the pores for the subsequent infiltration.

7) In our method the initial green body contains only one solid material, diamonds. This is advantageous when using up-to-date forming methods such as slip casting or slurry casting. These forming methods provide for production of articles with complex shapes. When using mixtures where the particles have great difference in densities and size, and if fibres are used, these forming methods may be more complicated.

8) The process can give various different complicated shapes due to near net-shape techniques and the ability to machine the intermediate body with advanced methods. Pyrocarbon deposition or pre-infiltration of silicon will provide for sufficient green strength for machining complicated shapes. The shape and size of the final body is not restricted to moulding techniques. This leads to cost advantages by not being restricted to forming techniques by the use of moulds and by avoiding the expensive use of mould during the heat treatment and silicon infiltration steps. Besides, there will not be problems with releasing bodies from the mould.

9) The process according to the present invention gives significant cost advantages due to the fact that a great number of bodies may be produced in one batch and the main method to produce carbon, graphitization of diamond, is a faster method than pyrocarbon and uses no gas. Due to the machinability of strong intermediate bodies, tedious and expensive machining of the final body may be avoided. If no additional machining is needed, the process is very simple, a "one step process" where the graphitization of diamond is performed during the temperature raise before the silicon infiltration. There is no need of using moulds otherwise than for, in some cases, forming. Due to the net-shaping, no or very little finishing and machining of the final product is needed, which reduces the costs further. Diamonds with a relatively lower price may be used.

**The material according to the present invention holds several advantages:**

The versatility of the process is unique. The process parameters can be varied to give the material produced desired properties. With this method it is possible to produce not only materials of good wear resistance and with improved performance for abrasive, grinding and other mechanical removing operations but also for structural and engineering purposes, load bearing materials etc.

One feature of the invention is that the proposed material is characterised by the possibility to combine different excellent properties simultaneously and to match such properties that corresponds best to the various intended applications.

Controllable properties are:

1. A high Young's modulus and sufficient strength in combination with low density.
2. High hardness and high bonding strength of the diamonds results in excellent abrasion and erosion wear resistance.
3. A high thermal conductivity, low thermal expansion coefficient, depending on the diamond content.
4. Maintenance of mechanical properties after exposure to temperatures up to 1500°-1600°C.
5. A ceramic composite with high thermal-shock resistance.
6. Electrical conductivity.

When mixing together small and large diamond particles, two facts affect the material properties; the high adhesion between the diamond particles and the matrix, and the high wear resistance of the matrix due to small diamonds distributed therein. Large diamond particles will drop out from the material if the bond to the matrix is insufficient or the matrix has low wear resistance. Small diamond particles reinforce the matrix, giving it high wear resistance and increased rigidity, strength, and thermal conductivity. All this improves significantly the abrasive properties (wearing, cutting and other mechanical material removing properties) of the materials: increased thermal conductivity decreases the temperature in the working area of diamond particles. Increased rigidity of final bodies will prolong the lifetime of the tool when used for high precision machining.

**EP 1 019 337 B1**

**EXAMPLES OF METHOD REALISATION AND MATERIAL PROPERTIES**

The following different diamond types were used for preparation of samples, which were tested: ACM 5/3 synthetic diamond particles (size range 3-5 μm), ACM 10/7 synthetic diamond particles (size range 7-10 μm), ACM 14/10 synthetic diamond particles (size range 10-14 μm), ACM 28/20 synthetic diamond particles (size range 20-28 μm), ACM 63/50 synthetic diamond particles (size range 50-63μm), and A-800/630 natural diamond particles (size range 630-800 μm,) all from Superhard Materials Institute, Kiev, Ukraine.

**Example 1: Control of properties**

To demonstrate our ability to manufacture materials with different properties of key importance we have chosen variation in a) E-modulus and b) Electrical resistivity. The method of the present invention achieves the result by controllably selecting the following process steps:

1. A mixture is formed of diamond micro-powder of the type ACM 28/20 and a binder - 25 % alcohol solution of phenol formaldehyde resin - in an amount of 2 wt-% dry resin of the mass of diamond powder. The mixture is stirred thoroughly and sieved through a screen with mesh size of 200 μm.
2. Forming of bars of length 50 mm with rectangular cross section area 6x5 mm is made by pressing using metallic moulds, with a force of 45 kN at room temperature.
3. The green bodies are removed from the mould, kept at room temperature in air for 10 hours subsequently dried at 70°C for 1 hour and hardened at 150°C for 1 hour. The produced work-pieces contain 98 wt-% of diamond (56 vol.- %) and has a porosity of 41 vol-%.
4. Heat treatment of the samples is done in vacuum (pressure 0.1 mmHg) at 1550°C. Sample no 1 was heated 3 minutes, sample no 2 was heated 10 minutes, sample no 3 for 20 minutes and sample no 4 heated 30 minutes.
5. Infiltration is done by melted silicon on the surfaces of the intermediate bodies at 1550°C.

As a result polycrystalline bars are produced of the length 50mm with rectangular cross section area 6x5mm, i.e. the size and shape is not changed within the accuracy of the measuring technique (± 0.001mm). The bodies contain diamond particles bonded by a matrix of silicon carbide and silicon.

Additionally samples 5-7 were formed (5x6x50mm) of diamond powders using a temporary binder. Sample no 5 is produced from diamond powder ACM 10/7, sample 6 from a mixture of diamond powders ACM 63/50 and ACM 14/10 and sample 7 from a mixture of diamond powders ACM 63/50 and ACM 10/7.

The work-pieces were heat treated at 1550°C in vacuum and then infiltrated by liquid silicon.

Table of the properties of the as-fabricated samples:

| Samples | | | | Content, vol% | | | Properties | | |
|---|---|---|---|---|---|---|---|---|---|
| No | Initial material | Heat treatment [min] | Diamond content decrease [wt-%] | D | SiC | Si | E-modulus [GPa] | Electrical resistivity [mOhm·m] | Final porosity [vol.-%] |
| 1 | ACM 28/20 | 3 | 16 | 47 | 32 | 21 | 550 | 0.28±0.01 | 0.06 |
| 2 | ACM 28/20 | 10 | 19 | 46 | 39 | 15 | 580 | 1.03±0.02 | 0.09 |
| 3 | ACM 28/20 | 20 | 22.5 | 43 | 45 | 12 | 580 | 1.79±0.02 | 0.09 |
| 4 | ACM 28/20 | 30 | 25 | 41 | 49 | 10 | 580 | 1.88±0.02 | 0.12 |
| - | | | | | | | | | Density [kg/m$^3$] |
| 5 | ACM 10/7 | 3 | 23 | 45 | 50 | 5 | 638 | - | 3300 |
| 6 | 60 wt% 63/50 40wt% 14/10 | 3 | 8 | 65 | 21 | 14 | 660 | - | 3280 |
| 7 | 60 wt% 63/50 40 wt% 10/7 | 3 | 12 | 62 | 31 | 7 | 718 | - | 3340 |

Thus the experiment demonstrates that by controlling process parameters and material composition, materials with targeted properties can be obtained.

Especially the decrease of the silicon content in the materials results in increase of the electrical resistivity. The electrical resistivity of the material is on a par with the corresponding semiconductor materials. The material has sufficient electrical conductivity and it makes possible to use electro-erosion machining for additional machining of the material, for instance. The electrical resistivity was measured by Four-Probe method.

As can be seen the E-modulus may be varied over a wide range. By changing the small diamonds ACM 14/10 in sample 6 to even smaller diamonds ACM 10/7 in sample 7, it is possible to increase the E-modulus even more.

**Example 2: Infiltration by dipping in molten silicon**

A mixture is formed of diamond powder ACM 10/7 and ethyl alcohol added in amount of 10 wt-%. The mixture is stirred thoroughly and passed through a screen with the mesh size of 200 µm.

Forming of a sample, of length 50mm with rectangular cross section area 6x5 mm is made by pressing in a metallic mould with a force about 45 kN, at room temperature.

The green body is removed from the mould and kept at room temperature for 3 hours. The work-piece contains 100 wt-% of diamond and has a porosity of 42 vol.-%.

Heat treatment of the work-piece is carried out in a medium of argon, at a pressure of 800 mmHg and at 1550°C during 4 min. The heat treatment decreases the diamond concentration in the intermediate body by 22 wt-%. Note that the temperature and time of the heat treatment are chosen so that the silicon is totally melted but first after the completion of the work-piece heat treatment. Infiltration of the intermediate body is made by dipping it into molten silicon at 1550°C.

The resulting polycrystalline body is practically nonporous (<1vol-%) with length of 50 mm and a rectangular cross section area 6x5 mm, i.e. the size and shape is not changed within the accuracy of measuring technique (±0.001mm).

The final body contains diamond particles bonded by a matrix of silicon carbide and silicon (45 vol-% diamond, 48 vol-% SiC, 7 vol-% Si) with a density of 3.28 g/cm$^3$. The three-point bending strength is 400 MPa and was measured on as-fabricated samples without any machining or polishing.

**Example 3: Measurement of the thermal stability, E-modulus and specific rigidity**

Sample no 1 is produced of diamond powder ACM 10/7, sample no 2 is produced of diamond powder ACM 14/10, sample no 3 from diamond powder ACM 28/20 and sample no 4 from a mixture of diamond powders ACM 63/50 and ACM 10/7. Bars were formed of size 5x6x50 mm from the diamond powders using a temporary binder. The work-pieces were heat treated at 1550°C in vacuum and then infiltrated by liquid silicon.

The density, Young's modulus and thermal stability were measured and the specific rigidity, H, calculated using the ratio: H=E/(ρ*g) where E=Young's modulus, ρ=density and g=9.8 m/sec$^2$, gravitational factor (see table).

Thermal stability was studied by sequential heating of the samples in vacuum at temperatures 1200°, 1300°, 1400°, 1500°, 1600°C during 45 min. The Young's modulus and shape of the samples were tested at room temperature after each heat treatment. The stability temperature for keeping the Young's modulus is here defined as the maximum temperature where the Young's modulus will not change more than 4% from the initial value after heat treatment. The stability temperature for keeping of the shape is here defined as the maximum temperature where the shape of the samples is unchanged and where the samples will not crack.

Table of the properties of the as-fabricated samples:

| Samples | | Final content | Properties | | | | | |
|---|---|---|---|---|---|---|---|---|
| No | Initial diamond powder | Material composition [vol-%] | Density [kg/m$^3$] | Young's modulus [GPa] | Specific rigidity H (10$^6$m) | Thermal stability [°C] | | |
| | | | | | | | Keeping of Young's modulus | Keeping of shape |
| 1 | 10/7 | Diamond 46 SiC 47 Si 7 | 3290 | 630 | 19.1 | | 1500°C | 1500°C |

(continued)

| Samples | | Final content | Properties | | | | | |
|---|---|---|---|---|---|---|---|---|
| No | Initial diamond powder | Material composition [vol-%] | Density [kg/m$^3$] | Young's modulus [GPa] | Specific rigidity H ($10^6$m) | Thermal stability [°C] | | |
| | | | | | | | Keeping of Young's modulus | Keeping of shape |
| 2 | 14/10 | Diamond 46 SiC 42 Si 12 | 3250 | 580 | 17.8 | | 1500°C | 1500°C |
| 3 | 28/20 | Diamond 49 SiC 31 Si 20 | 3180 | 560 | 17.6 | | 1500°C | 1700°C |
| 4 | 60 wt% 63/50 40 wt% 10/7 | Diamond 62 SiC 31 Si 7 | 3340 | 718 | 21.5 | | 1600°C | 1600°C |
| Data for SiC ceramics, source 1) | | | 3100-3200 | 400 -420 | 13 | | - | - |

The results shows that the produced materials have a unique thermal stability: they keep their properties up to 1500°C, that is by 300-400°C higher than for other diamond polycrystalline materials, see source 2). Thus, the produced material can be used in high temperature conditions. The table shows also that the materials have excellent rigidity that is much higher than properties of known materials.

1) G.G.Gnesin. "Oxygenless ceramic materials", Kiev Technology, 1987, p.139-142.
2) A.A. Shulzhemko, "Polycrystalline materials on the basis of diamond", Kiev, 1989.

**Example 4: Measurement of the bending strength**

Sample 1 is made of diamond powder ACM 14/10 and sample 2 of ACM 28/20. Sample 3 is made of a mixture of diamond powders ACM 63/50 and ACM 10/7. Sample 4 is made of a mixture of diamond powder ACM 63/50 and ACM 28/20. Sample 5 is made of ACM 28/20. Samples 1-5 are made according to the example 3, but sample 1-4 as circular plates: (Ø=20mm, h=2mm) and sample 5 was produced as a bar for measurement of the three-point bending strength. Table of the properties of the as-fabricated samples:

| Sample | Initial diamond powder | Material composition [vol %] | Density [kg/m$^3$] | $\sigma_{\text{bend biaxial}}$ [MPa] |
|---|---|---|---|---|
| 1 | 14/10 | Diamond 46 SiC 42 Si 12 | 3250 | 260 |
| 2 | 28/20 | Diamond 49 SiC 32 Si 19 | 3190 | 115 |
| 3 | 90 wt% 63/50 10 wt-% 10/7 | Diamond 58 SiC 14 Si 28 | 3140 | 125 |
| 4 | 80 wt-% 63/50 20 wt-% 28/20 | Diamond 57 SiC 14 Si 29 | 3120 | 136 |
| - | - | - | - | $\sigma_{3\text{-p}}$ [MPa] |

(continued)

| Sample | Initial diamond powder | Material composition [vol %] | Density [kg/m³] | σ bend biaxial [MPa] |
|---|---|---|---|---|
| 5 | 28/20 | Diamond 44 SiC 48 Si 8 | 3270 | 310 |

The table shows that the as-fabricated plates of the material have sufficient bending strength for applications as a construction material, for instance. The bending strength is measured on as-fabricated samples without any machining or polishing.

**Example 5: Measurement of the thermal conductivity**

All samples were produced according to example 3. Samples 1-3 are made cylindrical (Ø=15mm, h=10mm). Samples 4-8 are cylindrical (Ø=20mm, h=2mm). For used diamond powders see table. The thermal conductivity of the samples was determined by measuring temperature differences on samples during transmittal of stationary thermal flow. Two radial openings of diameter 1mm and depth 8mm parallel to cylinder base were made in the samples 1-3, using electro-erosion. The distance between the openings was 6 mm.

Sample 9 was made from a mixture of diamond powders ACM 63/50 and ACM 14/10. The thermal expansion coefficient was measured with the use of a quartz dilatometer in the temperature range 20-100°C. The change of the linear dimensions of the sample versus increase of temperature was measured. Thus thermal expansion coefficient along the sample length was determined.

Table of properties:

| Sample | Initial diamond powder | Composition [vol-%] | | | Thermal conductivity [W/mK] |
|---|---|---|---|---|---|
| | | D | SiC | Si | |
| 1 | 5/3 | 29 | 70 | 1 | 180 |
| 2 | 28/20 | 49 | 20 | 31 | 200 |
| 3 | 14/10 | 46 | 42 | 12 | 260 |
| 4 | 60 wt-% 63/50 40 wt% 5/3 | 54 | 40 | 6 | 370 |
| 5 | 10/7 | 45 | 48 | 7 | 267 |
| 6 | 28/20 | 47 | 32 | 21 | 259 |
| 7 | Al | - | - | - | 225 |
| 8 | Cu | - | - | - | 400 |
| Data for silicon carbide ceramics, source 1). | | - | - | - | 80-85 |
| - | - | - | - | - | **Thermal expansion coefficient [x 10⁶/K]** |
| 9 | 60 wt-% 63/50 40 wt-% 14/10 | 65 | 21 | 14 | 2,2 |

The table shows that the samples made according to the present invention have excellent thermal conductivity that is much higher than of the silicon carbide ceramics, and greater than for aluminium. Sample 4, having a greater concentration of diamond, has thermal conductivity close to that of copper.

The thermal expansion coefficient of the diamond composite is very low.

1) G.G.Gnesin. "Oxygenless ceramic materials", Kiev Technology, 1987, p.139-142.

**Example 6: Measurement of the biaxial strength of green bodies, work-pieces and intermediate bodies**

After graphitization and deposition of pyrocarbon, the strength of the intermediate bodies will increase, which allows machining of the intermediate bodies before Si- infiltration. In this test the biaxial strength of green bodies, work pieces and intermediate bodies were measured. Intermediate bodies consisted of pyrocarbon deposited and graphitizised bodies.

Green bodies were prepared by pressing of the diamond powders. Work-pieces were prepared by heating the green bodies in vacuum at 1000°C in 20 minutes to remove binders. The intermediate bodies were prepared by graphitization at 1550°C for 3-30 minutes and deposition of up to 5 wt.-% pyrocarbon at 850°C, or in different order. The samples can be divided into nine groups depending on their treatment. Two types of samples (different diamond particle sizes) were prepared for each group. Five samples of each combination of treatment and particle sizes were tested and the results are presented as mean values.

Table of the mean biaxial strength

| Sample | Diamond particle size [$\mu$m] | Sample treatment procedure | $\sigma_{biax}$ [Mpa] |
|---|---|---|---|
| | | **Green bodies:** | |
| 1-2 | 5 to 28 | Green bodies by pressing | 1.1-1.4 |
| | | **Work-pieces:** | |
| 3-4 | 5 to 28 | Work-pieces heated at 1000°C | 2.8-3.4 |
| | | **Intermediate bodies:** | |
| 5-18 | 5 to 28 | Graphitization 3-30 min and deposition of pyrocarbon. | 2.3-12.9 |

As can be seen from the table the strength of the work-pieces were significantly higher (about 2 times) than that of the initial green bodies. Deposition of pyrocarbon is an effective method to increase the sample strength, and can be used both after and before graphitization.

In summary, the result shows that intermediate bodies of good mechanical strength can be obtained, which allows machining before Si infiltration.

**Example 7: Thermal shock resistance**

A preliminary test was done on the thermal shock resistance. The sample was heated to 1000°C in air and then it was put directly in water (quenched) of room temperature. The sample shape remained the same and no fractures were observed.

In a second similar test the strength after thermal shock was measured. A sample of the size 5x6x50 mm, was prepared of ACM 14/10 diamond particles. The sample was heated to 500°C and then put in room temperated water. The following examination with optical microscopy did not reveal any cracks or defects on the surface. The same procedure was done and similar results was obtained after heating to 800°C. After this, the sample was heated to 1100°C and quenched. This time the optical microscopy showed small microcracks on the sample surface. The 3-point-bending strength was measured to about 38 MPa, which is much lower than the original strength.

**EXAMPLES OF TECHNOLOGICAL TESTS**

The following different diamond types were used for preparation of samples, which were tested: EMBS 30/40 mesh natural diamond particles, SDB 1025 30/40 mesh, synthetic diamond crystals, SDB 1125 30/40 mesh synthetic diamond crystals and DEBDUST 30/40 mesh natural ovalised diamonds, all from De Beers Co. 30/40 mesh is equal to diamond particles in the size range of 420-600 $\mu$m.

Diamond micropowders ACM 10/7 (size range 7-10 $\mu$m), ACM 14/10 (size range 10-14 $\mu$m), ACM 28/20 (size range 20-28 $\mu$m), ACM 40 (particle size less than 40 $\mu$m), ACM 63/50 (size range 50-63 $\mu$m) and A-800/630 natural diamond particles (size range 630-800 $\mu$m,) all from Superhard Materials Institute, Kiev, Ukraine.

**Example 8: Dressing tool tests; Comparison of the wear resistance**

With this example we will show that we can control the properties by the choice of diamond type, diamond quality, particle sizes and particle size distribution:

The dressing conditions in this example were:

$V_{wheel}$ = 35 m/sec, $S_{lengthwice}$ =0.8 m/min, $S_{cross}$ = 0.02 mm/turn.

The samples were tested for dressing of different Russian abrasive wheels (diameter 600 mm and width 63 mm) of the following types: 600x63X305 14A40П CMI 6K7П (electrocorundum wheel, soft to medium); 600x63X305 14A40П CT3 7K5 (elecrocorundum wheel, medium to hard); 600x63X305 14A25П CM2 6K5 (electrocorundum wheel, soft to medium); 600x63X305 14A40П CT3 37K5 (electrocorundum wheel, medium to hard) and 600x63X305 63C40П CM1

6K7 (green silicon carbide wheel, soft to medium).

**Dressing tool test no 1.**

Samples 1-11 were tested against a reference material a composite material «Slavutich» (with diamonds of the type A-800/630 in a matrix of cemented carbide) from Superhard Materials Institute, Kiev, Ukraine.

*Sample preparation:*

See the table below for diamond types used for the preparation of the samples and the relation between the different types. All samples are produced from mixtures of very large (>420μm) and finer diamonds.
Diamond types used, mass ratios of the different diamond particles and size ratio:

| Sample | Larger diamonds | Finer diamonds | PyC content | Mass ratio: Large/ Fine | Ratio of mean particle size: Large/ Fine |
|---|---|---|---|---|---|
| No 1 | A-800/630 | ACM 10/7 | - | 6/10 | 84 |
| No 2 | A-800/630 | ACM 14/10 | - | 6/10 | 60 |
| No 3 | EMBS 30/40 mesh | ACM 14/10 | 5 % | 12/10 | 43 |
| No 4 | EMBS 30/40 mesh | ACM 28/20 | 5 % | 12/10 | 21 |
| No 5 | EMBS 30/40 mesh | ACM 10/7 | - | 6/10 | 60 |
| No 6 | EMBS 30/40 mesh | ACM 10/7 | - | 12/10 | 60 |
| No 7 | EMBS 30/40 mesh | ACM 10/7 | - | 23/10 | 60 |
| No 8 | SDB 1025 30/40 mesh | ACM 10/7 | - | 12/10 | 60 |
| No 9 | SDB 1125 30/40 mesh | ACM 10/7 | - | 12/10 | 60 |
| No 10 | SDB 1125 30/40 mesh | ACM 10/7 | - | 6/10 | 60 |
| No 11 | DEBDUST 30/40 mesh | ACM 10/7 | - | 6/10 | 60 |

A binder (20% water emulsion of poly(vinylacetate) PVAC) is added to the diamond mixtures for samples 1-2 (the amount of the mass of dry PVAC is 1 wt% of diamond mass). A binder (25% alcohol solution of phenol formaldehyde resin) is added to the diamond mixtures for samples 3-7, 10 and 11 in amount of 8 % of the mass of diamonds (that is equal to 2 wt.-% of dry resin). Ethyl alcohol is added to the diamond mixtures for samples 8 and 9 in amount of 10 wt-%. All the mixtures were thoroughly stirred, mixtures for samples 1-2 were sieved through a screen of mesh size 1.5 mm, and mixtures for samples 3-11 were sieved through a screen with mesh size of 1 mm. The forming of all samples is done by pressing using a metallic mold at room temperature with a force of 15 kN. The pressed bodies are removed from the mold. The samples are cylindrical with diameter of 10 mm and height of 10 mm. Samples 1-2 dried at 70°C for 1 hour. Samples 3-7, 10 and 11 are left in air at room temperature for 10 hours with subsequent drying at 70°C for 1 hour and hardening at 150°C for 1 hour. Samples 8 and 9 are kept in air, at room temperature for 3 hours to evaporate the temporary binder, ethyl alcohol. The samples 1-2 were heat treated during 4 minutes at 1550°C in vacuum (pressure of 0.1 mm Hg). Pyrocarbon was added up to 5 wt-% at 870°C to samples 3-4. The graphitization of the samples 3-11 is done in vacuum (at pressure of 0,1 mmHg) at 1550°C for 3 minutes.The decrease in the diamond content in the produced intermediate bodies is 8-14 wt-%. All samples were infiltrated at 1550°C by liquid silicon when the silicon placed on the intermediate body surface starts to melt.
The final bodies 1-2, 3-7 and 11 comprises very large particles of natural diamond bonded by a matrix formed by finer diamond particles, silicon carbide and silicon. The final bodies 8-10 comprises the same except that the large diamond particles are synthetic.
The final body compositions:

| Sample | Larger diamonds [vol.-%] | Finer diamonds [vol.-%] | SiC [vol.-%] | Si [vol.-%] | Calculated hardness of matrix: |
|---|---|---|---|---|---|
| No 1 | 25 | 34 | 35 | 6 | 57 |
| No 2 | 25 | 36,6 | 30,6 | 7,8 | 60 |
| No 3 | 37,5 | 30,1 | 14,1 | 18,3 | 57 |
| No 4 | 37,5 | 27,8 | 26,6 | 8,1 | 57 |
| No 5 | 25 | 33,5 | 34,7 | 6,8 | 57 |
| No 6 | 37,5 | 23,9 | 27,7 | 10,9 | 51 |
| No 7 | 50 | 16,2 | 21,0 | 12,8 | 45 |
| No 8 | 37,5 | 23,9 | 27,7 | 10,9 | 51 |
| No 9 | 37,5 | 23,9 | 27.7 | 10,9 | 51 |
| No 10 | 25 | 33,5 | 34,7 | 6,8 | 57 |
| No 11 | 25 | 32,6 | 34,2 | 8.2 | 57 |

The calculated hardness of matrix was obtained assuming a diamond hardness of 100GPa, a silicon carbide hardness of 25GPa and a silicon hardness of 10GPa.

The samples 1-4 was tested for dressing of abrasive wheels of the type 600x63X305 14A40Π CM1 6K7Π:

Relative consumption of large diamond particles [mg large particles / kg abrasive wheel]:

| Sample | Initial diamonds (+ pyrocarbon content) | Medium relative consumption of test sample [mg/kg] | Medium relative Consumption of larger diamonds [mg/kg] |
|---|---|---|---|
| Sample 1 | A-800/630 + ACM 10/7 | - | 0.66 |
| Sample 2 | A-800/630 + ACM 14/10 | - | 0.63 |
| Sample 3 | EMBS 30/40 mesh + ACM 14/10 (+5% pyC) | 1.91 | 0.78 |
| Sample 4 | EMBS 30/40 mesh + ACM 28/20 (+5% pyC) | 1.59 | 0.59 |
| Slavutich | A-800/630 | - | 2.16 |

Thus, the wear resistance of the bodies produced by the given example is about 3 times greater than the wear resistance of «Slavutich» material.

- The samples 5-9 was tested for dressing of abrasive wheels of the type 600x63X305 14A25Π CM2 6K5:
  Relative consumption of large diamond particles [mg large particles / kg abrasive wheel]:

| Sample | [mg/ abrasive kg] |
|---|---|
| Sample 5 | 0.52 |
| Sample 6 | 0.54 |
| Sample 7 | 0.72 |
| Sample 8 | 0.60 |
| Sample 9 | 0.45 |
| Slavutich | 1.5 |

The wear resistance of the samples is about 2-3 times greater than the wear resistance of the Slavutich material.

By chosing samples from the test, with small diamonds of the same size and types and large diamonds of the same size and type, i.e. samples of same conditions, it is possible to see how the silicon content affects the wear resistance of the body.

By comparing the samples 5, 6 and 7 we can see a trend between the silicon content and the calculated hardness and also the wear resistance of the matrix (consisting of small diamonds, silicon carbide and silicon), see table below. The calculated hardness values correspond with the measured overall hardness 57-61 GPa (see example 12).

| Sample | Larger diamonds | Finer diamonds | Si content of matrix [vol.-%] | Si content of composite [vol.-%] | Calculated hardness of matrix: | Wear resistance |
|---|---|---|---|---|---|---|
| No 5 | EMBS 30/40 mesh | ACM 10/7 | 9 | 6.8 | 57 | 0.52 |
| No 6 | EMBS 30/40 mesh | ACM 10/7 | 17 | 10.9 | 51 | 0.54 |
| No 7 | EMBS 30/40 mesh | ACM 10/7 | 26 | 12.8 | 45 | 0.72 |

Sample 5 with the best wear resistance also has the highest calculated matrix hardness and lowest silicon content. By comparing sample 8 and 9 with the same small diamond type (ACM 10/7), same calculated matrix hardness (57GPa) but with different large diamonds, SDB 1025 and SDB 1125 respectively, we can see that the better quality of sample 9 diamonds gives a better wear resistance.

- The samples 10-11 was tested for dressing of abrasive wheels of the type i) 600x63X305 14A40Π CT3 37K5 and ii) 600x63X305 63C40Π CM1 6K7:
  Relative consumption of large diamond particles [mg large particles / kg abrasive wheel]:

| | Wheel type i [mg/ abrasive kg] | Wheel type ii [mg/ abrasive kg] |
|---|---|---|
| Sample no 10: | 1.57 | 2.31 |
| Sample no 11: | 1.07 | 2.16 |
| Slavutich: | 4.13 | 13.2 |

The wear resistance of the bodies 10-11 is 2.5-3.5 times greater than for the Slavutich material at dressing of wheels of medium hardness. At dressing of green silicon carbide wheels they are 6 times greater.

**Dressing tool test no 2**

Sample I was made according to dressing tool test no 1, using diamonds of type EMBS 30/40 mesh and ACM 14/10. As reference material dressing tools, samples 2-3, from WINTER company (Ernst Winter & Sohn Diamantwerkzeuge GmbH & Co., Norderstedt, Germany) were tested.
Sample 2 - WINTER PRO 88 D601 H770 (diamonds in cemented carbide matrix)
Sample 3 - WINTER PRO 88 D711 H770 (diamonds in cemented carbide matrix)

- The samples 1-3 were tested for dressing of abrasive wheel of the type 600x63X305 14A40II

CT3 7K5. The duration of the test was 20 minutes. 3% $Na_2CO_3$ emulsion was used as coolant.

| Sample | The relative consumption of large diamonds [mg large particles / kg abrasive wheel]: |
|---|---|
| Sample 1 | 0.9 |
| Ref. sample 2 | 6.4 - 6.6 |
| Ref. sample 3 | 4.0-12.0 |

The wear resistance of the sample produced according to the invention is about 4-10 times greater than the wear resistance of the reference materials.

**Example 9: Microstructure analysis:**

The specification of the dressing tools used for the microstructure analysis:

| Sample | Content/Name | Dimension (mm) | Matrix |
|--------|--------------|----------------|--------|
| 1 | A-800/630 25 vol% ACM 14/10 75 vol% | $\phi = 8$ h = 7.5 | SiC+ Si |
| 2 | PRO88 D601 H770 | $\phi = 8$ h = 7.9 | Cemented WC |

The grinding surfaces of two samples were observed with a JSM-840 scanning electron microscope (SEM). Both samples were dense, and contained large diamonds with 400-800 µm particle sizes. The surface of the sample no 2 was quite rough and several diamond particles had been pulled out from the matrix. There were some scratches on the surface, which might arise from the diamond particles that has been fallen out. The surface of the sample no 1 was flatter than that of the sample no 2. No diamond particles were pulled out from the matrix, which indicates that the diamonds are strongly bonded to the matrix.

**Example 10: Abrasion test, erosion test and hot steel sliding test**

These following tests shows the strong bonding between the diamond particles and the matrix:
Two diamond composites were evaluated in an abrasion test, an erosion test and a test with sliding against hot steel. Sample 1 was made with 60% of diamond powder ACM 63/50 and 40 % ACM 10/7. Sample 2 was made with diamond particles ACM 14/10.
The following reference materials were used. All the standard materials are available on the commercial market and the data given for these here are Data Sheet information:

Ref. 1: Alumina from Sandvik Coromant AB, grade AZ96, containing 2.8wt.% zircon. Hardness of 1820 HV and a fracture toughness of 5.4 MN/m$^{3/2}$.
Ref. 2: Reaction bonded (Si infiltrated) silicon carbide from Goodfellow, labelled SiSiC, with about 10 % free silicon. Hardness of 2500-3000 kgf/mm$^2$. No specified fracture toughness.
Ref. 3: Pure silicon carbide, from Matenco AB, labelled SiC. Hardness of 2000 HV and a fracture toughness of 3.8 MN/m$^{3/2}$.
Ref 4: Cemented carbide from Sandvik AB, grade H6M, with 1.3 µm particles of WC in 6 wt.-% Co. Hardness of 1720 HV and fracture toughness of 10.1 MN/m$^{3/2}$.
Ref 5: Polycrystalline diamond (PDC) on cutting tips of T-MAX U from Sandvik Coromant AB.

***Abrasion with a diamond slurry***

A crater grinding technique was used. Spherical craters are produced on sample surfaces by rotating a stainless steel wheel with a rounded rim against the rotating sample. An abrasive medium, a particle slurry is added. The combined motions of the wheel and the sample result in a spherical crater ground into the sample surface.
A steel wheel of 20mm diameter and a load of 20g was used. The abrasive was of 4 µm monocrystalline diamonds mixed with a commercial standard liquid (Kemet type 0) to a concentration of 25g/l.
The volumes of the craters were measured with an optical profilometer and the removed volume per sliding distance was calculated.
Due to the large difference in wear resistance of the materials, different total sliding distances were chosen for the materials. The diamond composites, sample 1-2, were tested for 30.000 revolutions (corresponding to 1861m of sliding); the polycrystalline diamond (PDC) was tested for 8000 revolutions (500m); the ceramics were tested for 800 revolutions (50m) and the cemented carbide for 600 revolutions (38m). By varying the total number of revolutions, the final wear scar diameters were kept between 1-2 mm. At least five craters were produced on each sample.
Table of measurement results

| Material | Average crater diameter $\mu$m | Revolutions | Abrasion rate $\mu$m$^3$/m |
|---|---|---|---|
| Sample 1; ACM 63/50 + ACM 10/ 7 | 1.04 ± 0.10 | 30.000 | 0.85 ± 0.14 |
| Sample 2; ACM 14/10 | 1.11 ± 0.14 | 30.000 | 2.49 ± 0.20 |
| PCD | 0.48±0.02 | 8000 | 26.9±0.15 |
| SiSiC | 1.64 ± 0.03 | 800 | 274.2 ± 12.7 |
| SiC | 1.38 ± 0.03 | 800 | 279.8 ± 5.6 |
| AZ96 | 1.82 ± 0.04 | 800 | 530.8 ± 10.4 |
| H6M | 1.80 ± 0.02 | 600 | 693.9 ± 18.7 |

Both diamond composites exceeded most reference materials in terms of abrasion resistance with more than two orders of magnitude (about 100 times better) and even the PCD ten times. Comparing the diamond composites, the sample containing only one particle size 10/14 was worn about three times as fast as the sample of two particle sizes 50/63-7/10.

Scanning electron micrographs of the abraded surfaces of the sample 1 and 2 showed that most diamonds were still firmly held by the matrix. Grooves from the abrasion were not a common feature on these surfaces. The matrix seemed to have been removed around the large diamonds, leaving the diamonds protruding from the surface. In particular the large diamonds in the 50/63-7/10 material showed flat, polished-like surfaces. No signs of fracturing, pulling out or crushing of the diamond phase could be seen. For scanning electron micrographs A1) for sample 1 and A2) for sample 2, see appendix.

The abraded surfaces of the PCD material revealed preferential removal of an intergranular phase, presumably a metal binder, followed by falling out of the diamond particles. The wear scars of all other reference materials contained abrasion grooves, together with other types of damage. They also showed local small scale fracture, presumably at grain boundaries.

It is believed that the dominant wear mechanism of diamond composites is the removal of the matrix followed by whole diamonds as the support from the matrix disappears; the large diamond phase is thus more difficult to remove from the surface than the small diamond phase. This could explain the superior performance of the sample 1 compared to sample 2.

### *Dry particle erosion resistance*

The test was made in a centrifugal equipment. Batches of specific amounts of erosive are added into a container and fed at a continuous rate into the centre of a rotating disc. The erosive is slung radially through channels in the disc due to centrifugal forces and hit the samples mounted at the periphery at fixed angles in relation to the stream of erosive.

The tests were done with 80 mesh (200 $\mu$m) silicon carbide erodents with a hardness of about 2500 HV. The impact angles were 45° and 90° and the impact velocity of the erosive particles was 93 m/s. The samples were masked leaving an area of 8.5x8.5 mm unprotected.

The weight loss of each sample per mass of impacting erodents was measured by weighing the samples before testing and after four specific intervals of exposure to erosion. For 1000 g charge of erosive each sample was hit by 10.8970 g and 7.1265 g for the impact angles 90° and 45°, respectively. The erosion rates were calculated from slopes of the curves describing the mass loss of the samples per impacting mass of erodents.

Table of results

| Material | Impact angle | Average material loss mg | Erosion rate mg/g |
|---|---|---|---|
| Sample 1; ACM 50/63 + ACM 10/7 | 90° | 0.9 | 0.08 |
| | 45° | 0.5 | 0.07 |
| Sample 2; ACM 10/14 | 90° | 2.2 | 0.21 |
| | 45° | 1.2 | 0.17 |
| SiSiC | 90° | 16.3 | 1.50 |
| | 45° | 7.8 | 1.10 |
| SiC | 90° | 6.5 | 0.63 |

(continued)

| Material | Impact angle | Average material loss mg | Erosion rate mg/g |
|---|---|---|---|
| | 45° | 2.2 | 0.34 |
| AZ96 | 90° | 14.7 | 1.35 |
| | 45° | 6.3 | 0.88 |
| H6M | 90° | 13.5 | 1.24 |
| | 45° | 6.3 | 0.88 |

The diamond composites, sample 1 and 2, performed better than the reference materials. For most reference materials the diamond composites were about one order of magnitude (about 10 times) better. Sample 2 (ACM 14/10) was however only a few times better than the best references (SiC and H6M), particularly in 45°erosion.

Normal impact erosion consistently resulted in higher wear rates than the 45°erosion, which is in agreement with the experience from brittle materials see source 3). However the difference in erosion rates between the two angles of impingement was relatively low for the diamond composites, in particular for sample 1.

3). Jacobson and S. Hogmark, "Tribologi", Karlebo förlag, 1996).

Scanning electron micrographs of the eroded surfaces of the diamond composites showed that both the diamonds and matrix are clearly visible. In contrast to abraded surfaces, signs of spalling or fracture can be seen here, in particular for the large diamond particles. The diamonds seems to adhere well to the matrix, though. There are no signs of removal of whole diamonds in the composite or of total crushing of the diamond phase. Instead a continuous wear-down of the particles and the matrix together seem to be the dominant wear mechanism.
Eroded surfaces of the silicon carbides revealed large amounts of fracture over the whole eroded surface. Small-scale fracture seems to be the dominant wear mechanism. The alumina AZ96 revealed signs of both fracture and ductile indentation, whereas the cemented carbides seemed to be worn by a more ductile mechanism not resulting in much traces of fracture on the surfaces.

### Test regarding properties in dry sliding against hot steel

Only the diamond composites were evaluated in this test. 5 mm wide composite rods were pressed by hand with loads of about 50-100 N, against the rim of a rotating stainless steel (AISI 316) heated to temperatures between 600° and 950°C with an acetylene-oxygen flame. The steel was 600 mm in diameter and about 40 mm wide and it was rotated at about 10 rpm.

Before the test the wheel rim was ground clean from scales. The composite rods were pressed against the glowing steel wheel for periods up to one minute. The test was repeated a number of times with the aim of producing observable wear scars.

The test did not result in any noticeable material removal from either of the composites. At higher temperatures around 900°C, steel sometimes tended to be smeared onto the composite. At these temperatures the steel was also easily cut away from the wheel, using the composite pieces as cutting edges. The scanning electron micrographs after hot steel sliding did not reveal any changes of the surfaces.

In an additional test against the rotating steel wheel heated to about 900°C, the composite was alternatively pressed for about 2-3 minutes and then ground against 220 mesh SiC abrasive paper. This procedure was repeated ten times at different locations of the rods. It was not possible to achieve any significant material removal by this additional test.

### Example 11: Turning test; turning of Al-Si 390

Four diamond-SiC-Si composites, samples 1-4, have been evaluated in unlubricated continuous cutting, by performing turning tests with an aluminium-silicon alloy as working material. The materials are characterised in terms of tip wear after a specific turning sequence and with scanning electron microscopy micrographs.

Sample 1 was produced from diamond particles ACM 5/3, sample 2 of ACM 10/7, sample 3 of ACM 40 and sample 4 of ACM 63/50. The samples tested were 3x12x4mm bodies with all corners orthogonal. The composites had relatively sharper edges, with radii varying between about 0.01 and 0.1 mm.

As reference materials two commercial cutting tool inserts from Sandvik Coromant AB were used: Polycrystalline diamond (PCD), from the T-MAX U series, labelled CCMW 09 T3 04F, CD10 and a cemented carbide (CC) cutting insert labelled CCMW 09 T3 04. These inserts had a tip angel of 80°, a clearance angle of 5° and a tip radius of 0.4mm.

The cutting tests were performed in a lathe. As working material, a 270 mm long cylinder with a radius of 200 mm of aluminium silicon alloy labelled Al-Si 390 was used. The Al-Si 390 work-pieces were mounted in the chuck, with one end left free. The cylinder surfaces were initially cleaned from scales by removing a couple of mm from its diameter. The machining was performed at the cylinder ends by feeding the inserts towards the axis of rotation

The cutting depth was 0.25 mm the feeding rate 0.5 mm per revolution and the rotational speed 1000 rpm, giving a maximum sliding speed of about 10 m/s. The composite bodies were tilted an angle of 4° to simulate the clearance angle of the commercial inserts.

The removed projected area of the tip after ten cuts was used as a value of the tip wear. The tips were evaluated with scanning electron microscopy (SEM). One or two such ten-cut sequences were performed on each material. The wear was measured on SEM micrographs using image analysis for the area measurements.

Since the composites had much sharper nose (smaller nose radii) than the commercial inserts of PDC and CC, additional tests were performed with 5/3 and 40 on blunt noses resulting from the first 10 run sequences, which gave nose radii of about 0.2 mm.

*Results:*

All composites, sample 1-4, could be used for turning of the Al-Si 390 alloy. Fracture of a cutting tip occurred once for the 10/7 composite, but whole tests runs were performed on other sharp corners of this body without fractures.

All the composites performed much better than the conventional cemented carbide (a factor of about four in the measured removed areas), but the PCD diamond was better than any of the composites, see table.

Table - Results from turning tests

| Material | Removed area 1st run [mm$^2$] | Removed area 2nd run [mm$^2$] |
| --- | --- | --- |
| Sample 1 - 5/3 | 0.05 | 0.04 |
| Sample 2 - 10/7 | 0.06 | - |
| Sample 3 - 40 | 0.04 | 0.04 |
| Sample 4 - 63/50 | 0.05 | - |
| CC | 0.14 | 0.17 |
| PCD | 0.01 | 0.008 |

The scanning electron micrographs of the cutting tips after cutting showed that the wear of the tips resulted from a continuous wear down and rounding of the cutting tips.

It can be concluded that dry, continuous cutting by turning can be performed with the evaluated composites on Al-Si 390. The composites are tough enough to resist this kind of stresses and, although the geometry of the composites was far from optimised for the operation, they comply with the PCD diamond cutting insert, and are much better than a conventional cemented carbide.

The differences in cutting tip shape between the samples 1-4 and the commercial inserts is unfortunate, since this makes a comparison between the two unfair. Presumably, composites with an optimised geometry (as for the PCD inserts) would perform even better.

**Example 12: Hardness measurements**

The Vickers hardness and Knoop hardness of the composites was measured. The samples are made according to example 3. Sample 1 is made of ACM 5/3 diamond powder and sample no 2 is made of ACM 10/7.

Before the test the samples of dimensions 12×12×5 mm, were ground and polished by a standard technique for hardness measurements. Flat samples were obtained, but they were not fully polished because the material was extremely hard.

Vickers hardness of a selected area was measured using Microhardness tester MXT-$\alpha$1. The standard formula for Vickers hardness calculation: Hv = 0.47P / $\alpha^2$ (Equation 1), where P is the load and $\alpha$ is the half length of the indent diagonal.

Knoop hardness of a random area was measured using INSTRON 8561 and calculated directly by: H$_k$ = P / S (Equation 2), where P is the load and S is the projected area.

Table of Vickers hardness of diamond/SiC/Si cutting tools

| Materials | Load (N) | $2\alpha$ ($\mu$m) | $H_v$ (GPa) | Indent Place |
|---|---|---|---|---|
| Sample 1 5/3 $\mu$m | 5 | 17 | 32.5 | Between diamond particles |
| | 20 | 30.8 | 39.6 | Between diamond particles |
| | 20 | 32.3 | 36.0 | Between diamond particles |
| | 20 | 29 | 44.7 | Between diamond particles |
| | 20 | 23.9 | 65.8 | Diamond particles |
| | 20 | 28.3 | 47.0 | Diamond particles |
| | 20 | 26 | 55.6 | Diamond particles |
| Sample 2 10/7 $\mu$m | 20 | 34.5 | 31.6 | Between diamond particles |
| | 20 | 33 | 34.5 | Between diamond particles |
| | 20 | 33.5 | 33.5 | Between diamond particles |
| | 20 | 28.5 | 46.3 | Between diamond particles |
| | 20 | 25.5 | 57.8 | Diamond particles |
| | 20 | 27 | 51.6 | Diamond particles |
| | 20 | 25.8 | 56.5 | Diamond particles |
| | 20 | 27 | 51.6 | Diamond particles |

Table of Knoop hardness of diamond/SiC/Si cutting tools

| Samples | Load (N) | Long diagonal ($\mu$m) | Short diagonal ($\mu$m) | $H_k$ (GPa) |
|---|---|---|---|---|
| Sample 1 5/3 $\mu$m | 20 | 82.9 | 8.5 | 56.8 |
| | 20 | 84.1 | 8.5 | 56.0 |
| | 30 | 125 | 13 | 36.9 |
| | 30 | 114.9 | 12.1 | 43.2 |
| Sample 2 10/7 $\mu$m | 20 | 84.2 | 7.9 | 60.1 |
| | 20 | 86.4 | 8.1 | 57.2 |

According to the design of Knoop indenter, the ratio of the long diagonal to the short diagonal is 7:1. Here the ratio of the long diagonal to the short diagonal in the indent was almost 10:1, indicating that the cutting tools have high elastic modulus.

It can be concluded from the tables that the Vickers hardness of the microstructure depends on the measured area. The Vickers hardness in the area between the diamonds was 30-40 GPa, and in the diamond particle area 50-60 GPa, i.e. the micro-zones are very hard.

As seen from the table there are some differences between the Knoop hardness of sample 1 and sample 2, 37-57 and 57-60 GPa respectively. The smaller diamonds are graphitizised faster wich reduces the relative diamond content in sample 1 more than in sample 2. This shows the importance of choosing correct size of diamonds.

The overall material hardness reflected by the Knoop hardness measurements show that the composites belongs to the group of superhard materials (>40 GPa). All measurements showed good repetition.

Table of typically reported ranges of Knoop hardness for some materials

| Material | Knoop hardness [GPa]* |
|---|---|
| Diamond particles | 80-120 |
| Polycrystalline diamond. PCD/PDC | 65-80 |
| Cubic boron nitride. CBN | 35-45 |

*) Depending on the crystallographic direction.

(continued)

| Material | Knoop hardness [GPa]* |
|---|---|
| Boron carbide | 25-35 |
| Aluminium oxide | 15-22 |
| Silicon carbide | 21-30 |
| Tungsten carbide | 17-22 |

*) Depending on the crystallographic direction.

**Example 13: Investigation of D-SiC-Si composites and metal brazing processes**

Experiments on brazing the diamond composites to the surface of steel and cemented carbide have been done with the main goal to estimate the possibility to connect the composites to metal by brazing. The brazing was done using Cu-Ti based alloys.

The experiments shows that the diamond composites are wetted by alloys of the chosen metals and that they can be brazed to steel and cemented carbide. Some difficulties were observed when brazing diamond composites to steel. The adhesion of the sample to metal is very high and observed cracks are likely to be connected with thermal stresses caused by large differences in thermal expansion coefficients.

| Sample | D-SiC | Cemented carbides | Steels |
|---|---|---|---|
| Thermal expansion coefficient | 2 | 4-6 | 17 |

**Example 14: Coating of D-SiC-Si composites with a diamond film**

The D/SiC/Si samples made according to the present invention were successfully diamond coated.

*Depositions Conditions:*

Standard hot filament CVD reactor, Tantalum filament, 2300°C, substrate maintained at ~900°C, H2/CH4 ratio 1%, Total gas flow 200 sccm, pressure 20 Torr, giving a diamond deposition rate of ~0.5 $\mu$m h-1, with crystallite size typically 1-2 $\mu$m.

*Surface pre-treatment*: Manual abrasion with 1-3$\mu$m diamond grit, although this proved unnecessary for most of these substrates since their surfaces were already sufficiently rough

*Results:*

Studies on cross-sections by microscopy-techniques reveal no debonding or cracks and mechanical scratch-tests shows that the coatings are very well adhered.

The original surface of composites having a bimodal grain size distributions of larger diamonds and small diamond in a SiC/Si matrix (where the larger where slightly above the matrix because of mechanical pre-treatment). It was found that a fine grained diamond coating nucleated and was grown between the larger diamonds forming a nice continuous film. So, the diamond coating has partially planarised the surface, with the matrix being completely coated, but with these large particles still protruding out of the now diamond-coated surface to a height of approximately 5$\mu$m.

POSSIBLE FIELDS OF APPLICATION

The composite material made according to the present invention is advantageous for applications where the combination of different superior properties are needed:

The stated properties make the proposed material valuable for such applications as fine instrument-making, including devices which operate under rapid thermal cycles, wear resistant products for mechanical engineering (nozzles for sand-blasting machines, products for mud pumps) size-stable supports for devices etc.

At operations with impacts, for instance milling and turning of unsymmetrical objects and at operations where the composite tool is exposed to vibrations there are higher requirements placed on the material regarding the toughness. At punching operations the hardness and the wear resistance of the material is important. A high E-modulus gives mechanical stability at applications requiring size accuracy.

A high thermal conductivity of the composite tool is important at operations where a lot of frictional heat is produced in the contact area,

At such applications where the material being in contact with the composite is aimed to be unchanged, for instance when used as bearings or similar, size gradient materials are useful. The area near the contact zone should have diamond sizes giving the highest possible wear resistance and the rest of the composite sizes giving the optimal mechanical properties, strength and toughness.

Another interesting application field is sawing and turning of wood and stone etc. where a high abrasive ability is combined with sufficient toughness.

Yet another application is dressing pencils and bars replacing single-crystal diamond dressing tools, diamond needles, and tools intended for shape dressing of grinding disks of complex profiles.

It is also possible to produce drills; saw components for machining of concrete, granite, marble; other construction materials and machining tools.

The composite material produced according to the present invention is also suitable to use as substrates for growing diamond films. See example 17. The technique of creating crystalline diamond-coatings using activated low-pressure gases is well known. This offers the potential for using a component surface with a diamond coating in a range of applications. However, to fully use the advantage of such a coating it has to be well bonded to the substrate material, without cracks or defects and preferably very fine-grained. Most engineering materials suitable as substrates will not fulfil the requirement of acting as nucleating agent for a dense fine-grained film, and the "thermal expansion coefficient mismatch" is not low enough to avoid stresses and cracks at the interface or in the diamond coating when cooling from the reactor temperature. The diamond-silicon carbide-silicon composites fulfil the requirements of acting as good nucleation agent for diamond film growth, "having a low thermal expansion coefficient mismatch" and an extremely good bound between the composite and diamond film. It is possible to grown diamond films on composite materials for a number of wear-parts applications. The film thickness should be larger than 3 $\mu$m, preferably larger than 10 $\mu$m, in most abrasive applications. Such coated composites will be especially useful in cutting-tools and bearings, where polished surfaces can be obtained with standard techniques such as rotating hot iron- or steel-wheels. The extraordinary good performance is a combination of the diamond coating and the strong, wear-resistant composite. A locally abrasive damage through the diamond coating will not cause any drastic or catastrophic change of the good properties of the component.

METHOD SPECIFICATIONS

The properties of the claimed material have been determined by the following methods.

**Density** was determined by hydrostatic weighing method. The method is based on determination of their mass in air and in water. Apparent density, which is a ratio of porous body mass ($m_1$) to a volume of space occupied by it, including volume of all pores in the material, is determined by the formula: $\rho = m_1 x \rho_{H2O}/(m_2 - m_3)$

$m_2$: mass of sample saturated with water,

$m_3$: mass of weights balancing the sample saturated with water when weighing it in water, g

$\rho_{H2O}$ - density of water, kg/m$^3$.

**Thermal conductivity** was measured by calorimeter using samples of $\varnothing$=15 mm and height=10 mm having radial openings at different heights for placing thermocouples there. Thermal conductivity was calculated as a ratio of thermal resistance to a distance between thermocouples. Sample thermal resistance was determined as a temperature drop of sample at steady-state thermal flow through it. The calculations were made taking account of corresponding constants of the device. The certified measurement error is $\pm$10 %.

**Three-point bending** at room temperature in as-received shape (without polishing).

Loading rate - 300 N/sec.

Strength ($\sigma_{3p}$) is calculated by the formula: $\sigma = 3Pl/2bh^2$ where

P- fracture load (N),

I - length between supports (40 mm),

b - width of sample (6 mm)

h - thickness of sample (5 mm).

**Biaxial bending** test is a ring-on-ring test where the loading fixture consist of basically two concentric rings. The stress field in this test is biaxial with principal directions in the radial and tangential directions. The biaxial strength ($\sigma$biax) of four samples was calculated by:

$\sigma_{biax} = 3P/4\pi t^2 [2(l+v)\ln(r_s/r_l) + (1-v)(r_s^2 - r_l^2)/R^2]$ where:

P = fracture load (N),      t = sample thickness (mm)

$v$ = Poisson's ratio (0.2),      $r_s$ = radius of the support ring (7 mm)

R = radius of the sample,      $r_l$ = radius of the loading ring (3.13 mm)

Young's modulus is measured in the direction of axis of a sample with length 50 mm and cross-section 5x6 mm by exciting and recording of resonance frequencies of longitudinal oscillations of the sample at room temperature. Young's modulus is calculated by the formula:

$E=(\rho/k_4)\times(2lxf_4/4)^2$, where

E - dynamic Young's modulus, Pa     l - length of sample (0.05 m)

$k_4$ - correction factor, equal to 0.98     $\rho$ - density of material, $kg/m^3$

$f_4$ - resonance frequency, Hz, which corresponds to 3rd ober-tone (usually - 500-600 kHz)

**Electrical conductivity** of samples was measured using samples of size 5x6x50 mm along the whole sample length by Four-Probe method. In this case a voltage drop between two internal probes was measured while external probes conducted current through the sample.

**Claims**

1. A method for manufacturing a diamond-silicon carbide-silicon composite from diamond particles comprising the steps of forming a work piece with a porosity of 25-60 vol-%, heating the work piece and controlling the heating temperature and heating time so that a certain desired amount of graphite is created by graphitization of diamond particles, thereby creating an intermediate body, wherein the amount of graphite created by graphitization is 6-50 wt-% of the amount of diamond, and infiltrating silicon into the intermediate body.

2. A method according to Claim 1, wherein the amount of graphite created by graphitization is 6-30 wt-% ofthe amount of diamond.

3. A method according to Claim 1 or 2, wherein the heating temperature during graphitization is lower than 1700°C.

4. A method according to Claim 3, wherein the heating temperature and heating time needed for the graphitization is empirically determined for the heating equipment used.

5. A method according to any one of Claims 1-4, wherein a certain amount of carbon is deposited in the work piece by exposing it to a gaseous hydrocarbon or gaseous hydrocarbons at a temperature exceeding the decomposition temperature for hydrocarbon or hydrocarbons.

6. A method according to Claim 5, wherein at least some graphitization ofthe diamond crystals is done before exposing the work piece to a gaseous hydrocarbon or gaseous hydrocarbons at a temperature exceeding the decomposition temperature for hydrocarbon or hydrocarbons.

7. A method according to Claim 5 or 6, wherein the intermediate body is machined into the desired shape and size of the final body before the step of infiltration of liquid silicon.

8. A method according to Claim 1, wherein the intermediate body is heated in the presence of vaporous silicon and then machined into the desired shape and size of the final body before the step of infiltration of liquid silicon.

9. A method according to any one of Claims 1-8, wherein the work piece is formed with a non-uniform distribution of diamond particles with various sizes and qualities.

10. A method according to any one of Claims 1-8, wherein the work piece is formed from a homogeneous mixture of diamond particles of various sizes eventually with the addition of a binder.

11. A method according to any one of Claims 1-8, wherein the diamond particles in the work piece is distributed in successively decreasing sizes from the surface of the work piece towards the centre thereof.

12. A method according to any one of Claims 1-11, wherein two or more work pieces are made separately and thereafter being brought together before the heat treatment and the infiltration steps.

13. A method according to any one of Claims 1-6,9-12, wherein the forming of the work piece is made in a mould, the heat treatment and the infiltration of silicon being made after the work piece has been taken out of the mould.

**Patentansprüche**

1. Ein Verfahren zum Herstellen eines Diamant-Silizium/Carbid-Silizium-Verbundwerkstoffes aus Diamantpartikeln, daß die Schritte, ein Werkstück mit einer Porösität von 25-60 Vol.-% zu formen, Erhitzen des Werkstückes und Kontrollieren der Heiztemperatur und der Heizzeit, so daß eine bestimmte, erwünschte Menge an Graphit durch Graphitisierung der Diamantpartikel geschaffen wird, wobei ein Zwischenkörper geschaffen wird, wobei die Menge an durch Graphitisierung geschaffenen Graphits 6-50 Gew.-% der Diamantmenge beträgt und Infiltrieren von Silizium in den Zwischenkörper umfaßt.

2. Ein Verfahren nach Anspruch 1, wobei die Menge an durch Graphitisierung geschaffenen Graphits 6-30 Gew.-% der Diamantenenge beträgt.

3. Ein Verfahren nach den Ansprüchen 1 oder 2, wobei die Heiztemperatur während der Graphitisierung niedriger ist als 1700 °C.

4. Ein Verfahren nach Anspruch 3, wobei die für die Graphitisierung erforderliche Heiztemperatur und Heizzeit für die verwendete Heizausrüstung empirisch bestimmt werden.

5. Ein Verfahren nach einem der Ansprüche 1-4, wobei eine bestimmte Menge Kohlenstoff in dem Werkstück durch dessen Aussetzung gegenüber einem gasförmigen Kohlenwasserstoff oder gasförmigen Kohlenwasserstoffen bei einer Temperatur, die die Zersetzungstemperatur des Kohlenwasserstoffes oder der Kohlenwasserstoffe übersteigt, abgelagert wird.

6. Ein Verfahren nach Anspruch 5, wobei wenigstens etwas Graphitisierung der Diamantkristalle gemacht wird, bevor das Werkstück einem gasförmigen Kohlenwasserstoff oder gasförmigen Kohlenwasserstoffen bei einer Temperatur, die die Zersetzungstemperatur des Kohlenwasserstoffes oder der Kohlenwasserstoffe übersteigt, ausgesetzt wird.

7. Ein Verfahren nach einem der Ansprüche 5 oder 6, wobei der Zwischenkörper vor dem Schritt der Infiltration des flüssigen Siliziums maschinell in die gewünschte Form und Größe des Finalkörpers verarbeitet wird.

8. Ein Verfahren nach Anspruch 1, wobei der Zwischenkörper in der Gegenwart von Siliziumdampf erhitzt wird und dann, vor dem Schritt der Infiltration des flüssigen Siliziums, maschinell in die gewünschte Form und Größe des Finalkörpers verarbeitet wird.

9. Ein Verfahren nach einem der Ansprüche 1-8, wobei das Werkstück mit einer nicht-gleichartigen Verteilung der Diamantpartikel mit verschiedenen Größen und Qualitäten geformt wird.

10. Ein Verfahren nach einem der Ansprüche 1-8, wobei das Werkstück aus einer homogenen Mischung aus Diamantpartikeln von verschiedener Größe und eventuell mit der Zugabe eines Bindemittels geformt wird.

11. Ein Verfahren nach einem der Ansprüche 1-8, wobei die Diamantpartikel in dem Werkstück von der Oberfläche des Werkstückes zu dessen Zentrum sukzessiv nach sich verringernder Größe verteilt sind.

12. Ein Verfahren nach einem der Ansprüche 1-11, wobei zwei oder mehr Werkstücke getrennt gemacht werden und danach vor der Hitzebehandlung und den Infiltrationsschritten zusammengebracht werden.

13. Ein Verfahren nach einem der Ansprüche 1-6, 9-12, wobei das Formen des Werkstückes in einer Form gemacht wird, wobei die Hitzebehandlung und die Infiltration des Siliziums gemacht werden, nachdem des Werkstück der Form entnommen wurde.

**Revendications**

1. Procédé de fabrication d'un composite diamant-silicium carbure-silicium, à partir de particules de diamant, comprenant les étapes consistant à former une pièce de fabrication ayant une porosité de 25 à 60 % en volume, chauffer de la pièce de fabrication, en contrôlant la température de chauffage et la durée de chauffage, de telle sorte qu'une certaine quantité désirée de graphite soit créée par graphitisation des particules de diamant, ce qui crée ainsi un corps intermédiaire, dans lequel la quantité de graphite créée par graphitisation va de 6 à 50 % en poids de la quantité de diamant, et infiltrer du silicium dans ledit corps intermédiaire.

2. Procédé selon la revendication 1, dans lequel la quantité de graphite créée par graphitisation va de à 6 à 30 % en poids de la quantité de diamant.

3. Procédé selon la revendication 1 ou 2, dans lequel la température de chauffage au cours de la graphitisation est inférieure à 1700 °C.

4. Procédé selon la revendication 3, dans lequel la température de chauffage et la durée du chauffage requises pour la graphitisation sont déterminées de manière empirique pour l'équipement de chauffage utilisé.

5. Procédé selon l'une quelconque des revendications 1 à 4, dans lequel une certaine quantité de carbone est déposée dans la pièce de fabrication en l'exposant à un hydrocarbure gazeux ou des hydrocarbures gazeux à une température supérieure à la température de décomposition de l'hydrocarbure ou des hydrocarbures.

6. Procédé selon la revendication 5, dans lequel au moins une partie de la graphitisation des cristaux de diamant est effectuée avant d'exposer la pièce de fabrication à 1' hydrocarbure à l'état gazeux aux hydrocarbures à l'état gazeux à une température supérieure à la température de décomposition de l'hydrocarbure ou des hydrocarbures.

7. Procédé selon la revendication 5 ou 6, dans lequel le corps intermédiaire est usiné pour obtenir la forme et la taille désirées du corps final avant l'étape d'infiltration de silicium liquide.

8. Procédé selon la revendication 1, dans lequel le corps intermédiaire est chauffé en présence de silicium à l'état de vapeur puis usiné pour obtenir la forme et la taille désirées du corps final avant l'étape d'infiltration de silicium liquide.

9. Procédé selon l'une quelconque des revendications 1 à 8, dans lequel la pièce de fabrication est formée avec une répartition non uniforme des particules de diamant de différentes tailles et qualités.

10. Procédé selon l'une quelconque des revendications 1 à 8, dans lequel la pièce de fabrication est formée à partir d'un mélange homogène de particules de diamant de différentes tailles, éventuellement avec l'addition d'un liant.

11. Procédé selon l'une quelconque des revendications 1 à 8, dans lequel les particules de diamant dans la pièce de fabrication sont réparties suivant leur taille décroissante successive à partir de la surface de la pièce de fabrication vers le centre de celle-ci.

12. Procédé selon l'une quelconque des revendications 1 à 11, dans lequel deux ou plusieurs pièces de fabrication sont faites séparément et ensuite mises ensemble avant les étapes de traitement thermique et d'infiltration.

13. Procédé selon l'une quelconque des revendications 1 à 6, 9 à 12, dans lequel le formage de la pièce de fabrication est effectué dans un moule, le traitement thermique et l'infiltration de silicium étant réalisés après que la pièce de fabrication a été sortie du moule.

## Fig.1 Flowchart of the preferred process steps.

**FORMING**
of green body / work-piece

**BINDER REMOVAL**
by heat treatment to produce work piece

**CONTROLLED
GRAPHITIZATION STEP**
to produce intermediate body

**PYROCARBON**
deposition

**PREINFILTRATION**
of silicon vapour

**MACHINING**
of intermediate
body

**MACHINING**
of intermediate body

**REACTION WITH
SILICON**

**PRODUCED
MATERIAL**

Fig. 2    Degree of graphitization (α) versus graphitization time (τ) at one specific temperature.

Fig. 5    Change of work-piece porosity during graphitization at different initial work-piece porosity ε₀.

Degree of graphitization α

Fig. 3a

Fig. 3b

Fig. 3c

Fig. 4a

Fig. 4b

Fig. 4c

Fig. 6a

Fig. 6b